# EUROPÄISCHE PATENTSCHRIFT

(11) **EP 3 293 163 B1**
(45) Veröffentlichungstag und Bekanntmachung des Hinweises auf die Patenterteilung: **20.12.2023**
(21) Anmeldenummer: 17151317.9
(22) Anmeldetag: 13.01.2017
(51) Int. Cl.: C04B 28/04, C04B 20/10, C04B 14/06, C04B 111/28

(54) **DÄMMSTOFF**
INSULATING MATERIAL
MATÉRIAU ISOLANT

(30) Priorität: 12.09.2016 DE 102016117087
(43) Veröffentlichungstag der Anmeldung: 14.03.2018
(73) Patentinhaber: Interbran Raw Materials GmbH, 69469 Weinheim (DE)
(72) Erfinder: SCHÜMCHEN, H. C. Kurt, 53949 Dahlem (DE)
(74) Vertreter: Von Rohr Patentanwälte Partnerschaft mbB

(56) Entgegenhaltungen:
- WO-A1-96/15998
- BOISSIERE M ET AL: "Pillaring effects in macroporous carrageenan-silica composite microspheres", JOURNAL OF COLLOID AND INTERFACE SCIENCE, ACADEMIC PRESS,INC, US, Bd. 294, Nr. 1, 1. Februar 2006 (2006-02-01), Seiten 109-116, XP024909047, ISSN: 0021-9797, DOI: 10.1016/J.JCIS.2005.07.003 [gefunden am 2006-02-01]
- LASKOWSKI JESSICA ET AL: "The effect of embedding highly insulating granular aerogel in cellulosic aerogel", THE JOURNAL OF SUPERCRITICAL FLUIDS, Bd. 106, 18. Mai 2015 (2015-05-18), Seiten 93-99, XP029289289, ISSN: 0896-8446, DOI: 10.1016/J.SUPFLU.2015.05.011
- KANG PENG ET AL: "Preparation of Aerogel-Modified Expanded Perlite and its Application in Heat Insulation Coating", ADVANCED MATERIALS RESEARCH, Bd. 668, 28. Februar 2013 (2013-02-28), Seiten 360-364, XP055403410, DOI: 10.4028/www.scientific.net/AMR.668.360
- MAHADIK D B ET AL: "Effect of concentration of trimethylchlorosilane (TMCS) and hexamethyldisilazane (HMDZ) silylating agents on surface free energy of silica aerogels", JOURNAL OF COLLOID AND INTERFACE SCIENCE, ACADEMIC PRESS,INC, US, vol. 356, no. 1, 28 December 2010 (2010-12-28), pages 298-302, XP028359838, ISSN: 0021-9797, DOI: 10.1016/J.JCIS.2010.12.088 [retrieved on 2011-01-03]

## Beschreibung

Die vorliegende Erfindung betrifft das technische Gebiet der Dämmstoffe, insbesondere zur Wärmedämmung.

Insbesondere betrifft die vorliegende Erfindung poröse Kompositpartikel, welche sich in hervorragender Weise zur Verwendung als Dämmstoffe bzw. in Dämmstoffen oder Dämmstoffmaterialien eignen.

Darüber hinaus betrifft die vorliegende Erfindung ein Verfahren zur Herstellung neuartiger poröser Kompositpartikel sowie ihre Verwendung in Dämmstoffen und Wärmedämmungen, insbesondere in Wärmedämmungen von Gebäuden.

Schließlich betrifft die vorliegende Erfindung Dämmstoffe und Wärmedämmungen, insbesondere Dämmputze sowie Einblas- und Schüttdämmungen, welche die erfindungsgemäßen Kompositpartikel enthalten.

Der Energieverbrauch von Gebäuden rückt aufgrund stetig steigender Energiepreise, eines geschärften Umweltbewusstseins und nicht zuletzt aufgrund gesetzgeberischer Maßnahmen, wie beispielsweise der Energieeinsparverordnung (EnEV), zunehmend in den Fokus von Immobilienbesitzern.

Um die Energieeffizienz von Gebäuden zu erhöhen, werden sowohl Neu- als auch Altbauten zunehmend mit einer Wärmedämmung ausgestattet. Die Dämmung von Neu- und Altbauten erfolgt dabei überwiegend durch eine sogenannte Außen- bzw. Fassadendämmung, d. h. die Außenseiten der Gebäude werden mit einer Wärmedämmung ausgerüstet.

Das Mittel der Wahl für derartige Außendämmungen sind derzeit Wärmedämmverbundsysteme (WDVS), welche aus einem plattenförmigen Dämmmaterial, einer außenseitig darauf angebrachten Armierungsschicht, bestehend aus einem Armierungsmörtel sowie einem Armierungsgewebe, und einem Oberputz aufgebaut sind. Die Dämmplatten sind üblicherweise auf Basis von Kunststoffen, insbesondere Polystyrol-Hartschäumen (PS), wie beispielsweise Polystyrol-Partikelschaum (EPS), Polystyrol-Extruderschaum (XPS) oder auf Basis von Polyurethanhartschäumen (PUR), ausgebildet. Wärmedämmverbundsysteme auf Grundlage der vorgenannten Kunststoffdämmplatten besitzen unter Idealbedingungen hervorragende Dämmeigenschaften, haben jedoch den Nachteil, dass sie eine Dampfsperre bilden und Feuchtigkeit aus dem Mauerwerk nicht an die Umgebung abgegeben werden kann, was in der Folge zur Bildung von Schimmel und Algen an und in der Gebäudefassade führt.

Darüber hinaus steigert die Feuchtigkeit die Wärmeleitfähigkeit des Dämmsystems, weshalb die theoretischen Wärmedurchgangskoeffizienten (U-Werte) gemäß EN ISO 6946 in der Praxis oftmals nicht erreicht werden. Weiterhin besitzen übliche Wärmedämmverbundsysteme (WDVS) Dicken von 15 bis 20 cm, um eine ausreichende Wärmedämmung zu gewährleisten. Dies ist jedoch in der Regel mit einer ästhetischen Verschlechterung der Gebäudefassade verbunden, weshalb Dämmungen mit Wärmedämmverbundsystemen beispielsweise an historischen Gebäuden oftmals nicht in Betracht kommen. Erschwerend kommt hinzu, dass die erhebliche Zunahme der Fassadendicke durch das Wärmedämmverbundsystem in einem reduzierten Lichteinfall in das Innere des Gebäudes resultiert, was wiederum den Wohnkomfort deutlich mindert. Zwar werden in jüngster Zeit zunehmend Vakuumdämmplatten, sogenannte Vakuum-Isolationspaneele (VIP), eingesetzt, welche eine effektive Wärmedämmung mit Wärmedämmverbundsystemen einer Dicke von ca. 10 cm erlauben, jedoch weisen auch diese Wärmedämmverbundsysteme den entscheidenden Nachteil auf, dass sie nicht diffusionsoffen sind, d. h. Feuchtigkeit aus dem Mauerwerk nicht an die Umgebung abgegeben werden kann.

Alternativ werden in geringem Ausmaß auch diffusionsoffene Dämmstoffe, insbesondere diffusionsoffene Wärmedämmverbundsysteme, beispielsweise auf Basis von Mineralwolle oder natürlichen organischen Fasern, wie Holz-, Kork-, Hanf- und Schilffasern, eingesetzt. Diesen Systemen fehlt jedoch oftmals die notwendige mechanische Stabilität und strukturelle Integrität, d. h. sie sind nicht formstabil, sondern müssen speziell verstärkt bzw. unterstützt werden. Darüber hinaus besitzen diese Systeme gegenüber Wärmedämmverbundsystemen auf Kunststoffbasis eine deutlich verringerte Dämmwirkung.

Sämtlichen organisch basierten Wärmedämmverbundsystemen, d. h. sowohl Wärmedämmverbundsystemen, welche auf organischen Polymeren basieren, als auch Wärmedämmverbundsystemen, welche auf biologischen Naturstoffen basieren, ist darüber hinaus gemein, dass sie brennbar sind und zur Verminderung der Brennbarkeit bzw. Entflammbarkeit üblicherweise mit brandhemmenden Chemikalien behandelt werden müssen. Diese weitere Behandlung der Dämmstoffe ist einerseits mit zusätzlichen Kosten verbunden und führt andererseits zu erhöhten Umweltbelastungen und Gesundheitsgefährdungen.

Durch Verwendung rein mineralisch basierter Materialien als Dämmstoff, wie beispielsweise Bims, Perlit und Vermiculit, insbesondere expandiertem Perlit und expandiertem Vermiculit, können eine Reihe der vorgenannten Nachteile vermieden oder zumindest abgeschwächt werden: So sind mineralisch basierte Dämmstoffe üblicherweise formstabil, diffusionsoffen und nicht brennbar. Sie besitzen jedoch insbesondere im Vergleich zu kunststoffbasierten Systemen den Nachteil, dass sie oftmals eine hohe Dichte aufweisen, was zu einem hohen Eigengewicht der Dämmung führt, und in ihren Wärmedämmeigenschaften nicht mit kunststoffbasierten Systemen konkurrieren können. Darüber hinaus sind mineralisch basierte Materialien oftmals derart hydrophil, dass sie vor Verwendung als Dämmstoff hydrophobiert werden müssen, um eine übermäßige Wasseraufnahme, welche Schimmel- und Algenbildung begünstigt, zu verhindern.

Mineralische Dämmstoffe werden oftmals in loser Schüttung, wie beispielsweise in Einblasdämmungen, oder auch in Dämmputzen zur Fassadensanierung verwendet. Dämmputze weisen im Allgemeinen mindestens ein Bindemittel sowie wärmedämmende Zuschläge auf. Sie sind üblicherweise diffusionsoffen ausgebildet, jedoch in ihrer Dämmwirkung sowie ihrer mechanischen Belastbarkeit Wärmedämmverbundsystemen deutlich unterlegen, was den Einsatz von Wärmedämmputzen auf wenige Anwendungsfälle, wie beispielsweise die Wärmedämmung von historischen Fassaden, beschränkt.

Angesichts der vielfältigen Möglichkeiten der Wärmedämmung mit jeweils erheblichen Nachteilen hat es im Stand der Technik nicht an Versuchen gefehlt, die vorhandenen Wärmedämmsysteme zur Wärmedämmung von Gebäuden zu verbessern:
So betrifft die DE 10 2012 101 931 A1 ein Fassadendämmsystem mit einer Unterkonstruktion in Holzständerbauweise und einer aus Mineralwollplatten gebildeten Dämmlage unter einer Putzschicht, wobei auf der Dämmlage ein Trägergewebe vorliegt, welches der Dämmung eine erhöhte mechanische Belastbarkeit verleihen soll.

Weiterhin betrifft die DE 10 2011 109 661 A1 eine Dämmstoffplatte sowie eine spezielle Anordnung mehrerer Dämmstoffplatten an einer Gebäudewand, welche mittels eines kapillaraktiven Klebstoffs zur Feuchtigkeitsregulierung verbunden sind.

Die WO 2007/090445 A1 betrifft eine Bauplatte, insbesondere zur Verwendung im Trockenbau, welche eine Matrix aus einem abgebundenen anorganischen Bindemittel aufweist, wobei in die Bindemittelmatrix Körner aus expandiertem hydrophobierten Perlit eingebracht sind.

Die DE 10 2007 042 000 A1 betrifft zweischalige Mauerwerke mit hydrophober, mikroporöser Wärmedämmung, wobei der Zwischenraum zwischen den beiden Schalen mit Paneelen aus hydrophoben, mikroporösen Wärmedämmstoffen aufgefüllt ist, die ohne Bindemittel verpresst werden und ohne Zusatz von Organosilanen hydrophobiert werden.

Die vorgenannten Systeme sind zwar geeignet, einzelne Aspekte gängiger Wärmedämmungen zumindest punktuell zu verbessern, ermöglichen jedoch nicht, die prinzipiellen Nachteile gängiger Wärmedämmsysteme zu überkommen.

Darüber hinaus wird gleichsam versucht, die Effizienz von Wärmedämmsystemen durch Einsatz spezieller Materialien zu verbessern. Insbesondere wird versucht, Aerogele in Dämmstoffe bzw. Dämmstoffsysteme einzuarbeiten, um deutlich verbesserte Dämmstoffe zu erhalten. Aerogele sind hochporöse Festkörper, die zu mehr als 90 Vol.-% aus Poren bestehen und sich aufgrund dieser extrem hohen Porosität zumindest theoretisch in hervorragender Weise zur Wärmedämmung eignen. Sie besitzen Wärmeleitfähigkeitszahlen λ im Bereich von 0,012 bis 0,020 W/(mK). Die üblicherweise für Dämmzwecke eingesetzten Aerogele bestehen aus Siliciumdioxid bzw. kondensierter Kieselsäure und werden durch Sol-Gel-Verfahren aus Silikaten gewonnen. Neben guten Wärmedämmeigenschaften zeichnen sich Aerogele weiterhin durch eine gute Schallisolierung sowie Nichtbrennbarkeit aus. Bedingt durch die hohe Porosität besitzen Aerogele jedoch nur eine äußerst geringe mechanische Stabilität und werden bereits bei geringer Beanspruchung zerstört.

Aufgrund der guten Wärmedämmeigenschaften von insbesondere silikatbasierten Aerogelen sind trotzdem zahlreiche Versuche unternommen worden, Aerogele in Dämmstoffe einzubauen. Unter anderem wird Aerogel in Dämmplatten aus Steinwolle eingearbeitet; ein entsprechendes Produkt ist unter der Handelsbezeichnung Aerowolle^{®} kommerziell erhältlich.

Darüber hinaus wurden auch Versuche unternommen, Aerogele in Dämmputze einzuarbeiten, wobei sich jedoch speziell die maschinelle Verarbeitbarkeit, insbesondere der Auftrag des Dämmputzes mittels Putzmaschinen, als schwierig herausstellt, da die fragilen Aerogelpartikel bei der Aufbringung auf die Gebäudewand unter Druck üblicherweise zerstört werden.

Die DE 10 2011 119 029 A1 betrifft einen Dämmstoff zur Herstellung eines Dämmelementes, wobei der Dämmstoff Aerogelpartikel und wenigstens ein anorganisches bzw. organisches Bindemittel enthält. Der Bindemittelanteil soll weniger als 3 Vol.-%, bezogen auf das gesamte Volumen des Dämmstoffs, betragen und der Dämmstoff enthält weiterhin expandierte bzw. extrudierte Styrolpolymerisatpartikel.

Aber auch mit den vorgenannten Systemen ist es bislang nicht gelungen, die prinzipiellen Nachteile der Verwendung von Aerogelen, nämlich die geringere mechanische Belastbarkeit und die daraus folgende herabgesetzte Haltbarkeit sowie die in der Praxis deutlich reduzierte Dämmwirkung der Dämmstoffe entscheidend zu verbessern.

Die DE 10 2015 117 035 beschreibt einen Dämmstoff aus einem porösen Trägermaterial, dessen offene Poren mit einem Aerogel gefüllt sind. Hierdurch wird es möglich, Dämmstoffe bzw. Dämmstoffpartikel bereitzustellen, welche theoretische Wärmeleitfähigkeiten von unter 0,030 W/(mK) aufweisen. Es hat sich jedoch gezeigt, dass mit dem in der DE 10 2015 117 035 offenbarten Verfahren zur Herstellung der Dämmstoffe zwar prinzipiell Dämmstoffe mit Wärmeleitfähigkeiten im Bereich von 0,020 bis 0,030 W/(mK) zugänglich sind, jedoch sind diese geringen Wärmeleitfähigkeiten nicht verlässlich reproduzierbar, insbesondere nicht im technischen oder großtechnischen Maßstab. Oftmals werden nur Wärmeleitfähigkeiten erzielt, welche größer sind als 0,035 W/(mK).

Eine eingehendere Betrachtung der gemäß der DE 10 2015 117 035 verwendeten porösen Trägermaterialien, insbesondere expandierten Perlits, hat gezeigt, dass der Anteil der offenen Poren im Trägermaterial stark schwankt und oftmals nur sehr gering ist, so dass das Aerogel nur einen sehr geringen Teil der Poren des porösen Trägermaterials füllen kann. Hierdurch werden wodurch die theoretisch sehr niedrigen Wärmeleitfähigkeiten des Kompositmaterials in der Praxis oftmals nicht erreicht.

Die wissenschaftliche Veröffentlichung K. Peng und H. Yang, "Preparation of Aerogel-Modified Expanded Perlite and Its Application in Heat Insulation Coating", Advanced Materials Research 668, 2013, Seiten 360 bis 364, betrifft Kompositpartikel auf Basis von expandiertem Perlit, in dessen Poren ein Silica-Aerogel eingelagert ist.

Weiterhin betrifft die wissenschaftliche Veröffentlichung D. B. Mahadik et al., "Effect of concentrationof trimethychlorosilane (TMCS)and hexamethylendisilazane (HMDZ) sylating agents on surface free energy of silica aerogels", Journal of colloid and interface science 356, 2011, Seiten 298 bis 302, betrifft die gezielte Einstellung hydrophober Eigenschaften der Oberflächen von Silica-Aerogelen, wobei zunächst ein Silica-Gele hergestellt und anschließend hydrophobiert werden.

Es fehlt somit weiterhin an einem verbesserten Dämmstoff, welcher nicht nur hervorragende Wärmedämmeigenschaften aufweist, sondern darüber hinaus mechanisch belastbar ist und folglich für eine Vielzahl von Anwendungsmöglichkeiten eingesetzt werden kann.

Der vorliegenden Erfindung liegt daher die Aufgabe zugrunde, Dämmstoffe, insbesondere Wärmedämmstoffsysteme, zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, aerogelbasierte Dämmstoffe bereitzustellen, welche mechanisch deutlich belastbarer sind als die bislang bekannten Systeme.

Darüber hinaus ist es eine weitere Aufgabe der vorliegenden Erfindung, Dämmstoffe bzw. Dämmstoffsysteme bereitzustellen, welche sich in eine Vielzahl von bestehenden Wärmedämmsystemen einarbeiten lassen und die prinzipiellen Nachteile dieser bekannten Wärmedämmsysteme vermeiden oder zumindest abschwächen.

Die zuvor geschilderte Aufgabenstellung wird erfindungsgemäß gemäß einem ersten Aspekt der vorliegenden Erfindung durch ein poröses Kompositmaterial nach Anspruch 1 gelöst; weitere vorteilhafte Weiterbildungen und Ausgestaltungen des erfindungsgemäßen Kompositmaterials sind Gegenstand der diesbezüglichen Unteransprüche.

Weiterer Gegenstand der vorliegenden Erfindung gemäß einem zweiten Aspekt der vorliegenden Erfindung ist die Verwendung der erfindungsgemäßen Kompositpartikel nach Anspruch 6.

Wiederum weiterer Gegenstand der vorliegenden Erfindung gemäß einem dritten Aspekt der vorliegenden Erfindung ist ein Verfahren zur Herstellung von porösen Kompositpartikeln nach Anspruch 7; weitere vorteilhafte Weiterbildungen und Ausgestaltungen dieses Erfindungsaspekts sind Gegenstand der diesbezüglichen Unteransprüche.

Wiederum weiterer Gegenstand der vorliegenden Erfindung gemäß einem vierten Aspekt der vorliegenden Erfindung ist ein Dämmstoff nach Anspruch 10.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - sind somit poröse Kompositpartikel, insbesondere für die Wärmedämmung, umfassend mindestens ein poröses Trägermaterial, wobei die Poren des porösen Trägermaterials mindestens ein Aerogel aufweisen, wobei das poröse Trägermaterial ausgewählt ist aus der Gruppe von expandiertem Perlit, expandiertem Vermiculit und deren Mischungen und das poröse Trägermaterial einer Behandlung zur Vergrößerung des offenen Porenvolumens durch mechanische und/oder chemische Behandlung unterzogen wurde, wobei das Aerogel hydrophobiert ist, wobei die Kompositpartikel eine Schüttdichte im Bereich 60 bis 100 kg/m³ aufweisen und wobei die Kompositpartikel in loser Schüttung eine Wärmeleitfähigkeit bei 25 °C im Bereich von 0,020 bis 0,045 W/(mK) aufweisen.

Im Rahmen der vorliegenden Erfindung ist es vorgesehen, dass die Poren des porösen Trägermaterials mit einem Aerogel gefüllt sind. Auf diese Weise wird es möglich, einerseits die Dämmeigenschaften, insbesondere die Wärmedämmeigenschaften, des porösen Trägermaterials durch das Aerogel deutlich zu verbessern, andererseits wird das Aerogel in den Poren des porösen Trägermaterials effektiver vor äußeren Einflüssen, insbesondere vor mechanischen Belastungen, geschützt.

Die Kompositpartikel nach der vorliegenden Erfindung zeichnen sich durch spezielle physikalische Eigenschaften aus: Ihre mechanischen Eigenschaften entsprechend weitgehend denen des porösen Trägermaterials, wohingegen die Wärmedämmeigenschaften der Kompositpartikel gegenüber dem porösen Trägermaterial deutlich verbessert sind.

Durch die erfindungsgemäßen porösen Kompositpartikel ist es möglich, diffusionsoffene Dämmstoffe zu erzeugen, welche einerseits ein nur geringes Schüttgewicht aufweisen und andererseits hervorragende Wärmedämmeigenschaften besitzen. Bei Verwendung von mineralischen Trägermaterialien können die erfindungsgemäßen porösen Kompositpartikel darüber hinaus sogar nichtbrennbar ausgebildet sein, so dass eine Behandlung mit umwelt- und gesundheitsgefährdenden Brandschutzmitteln vermieden werden kann.

Die porösen Kompositpartikel nach der Erfindung können einerseits in loser Schüttung verwendet werden, wobei sie bei Wahl geeigneter Partikelgrößen, welche eine dichte Schüttung ergeben, hervorragende Dämmeigenschaften aufweisen.

Andererseits ist es jedoch auch möglich, die erfindungsgemäßen porösen Kompositpartikel zur Herstellung von Wärmedämmverbundsystemen einzusetzen. Ein weiterer bevorzugter Anwendungsbereich der erfindungsgemäßen porösen Kompositpartikel sind Dämmputze, in welchen sie zu deutlich verbesserten Wärmedämmeigenschaften führen. Übliche Wärmedämmputze, welche rein mineralisch basierte Dämmstoffe aufweisen, sind zwar mechanisch belastbar, besitzen jedoch oftmals eine nur unzureichende Wärmedämmung, während Dämmputze, denen Aerogel zugemischt wird, mechanisch nicht ausreichend belastbar sind und beispielsweise nicht maschinell auf Fassaden aufgebracht werden können. Die erfindungsgemäßen porösen Kompositpartikel können hingegen wie rein mineralisch basierte Dämmstoffe verwendet und verarbeitet werden. Weiterhin eignen sich die erfindungsgemäßen Kompositpartikel auch in hervorragender Weise zur Herstellung von Dämmmassen, welche beispielsweise in Hohlziegel gefüllt werden, um deren Wärmeleitfähigkeiten deutlich zu reduzieren.

Unter einem porösen Material sind im Rahmen der vorliegenden Erfindung Materialien zu verstehen, welche Poren, d. h. Hohlräume, aufweisen. Die Poren stehen entweder untereinander und mit der Umgebung in Kontakt und enden an der äußeren Oberfläche des Materials, was als offene Poren bzw. offene Porosität bezeichnet wird, oder sind geschlossen und befinden sich im Innern des Materials ohne Verbindung zur Umgebung, was als geschlossene Poren bzw. geschlossene Porosität bezeichnet wird. Im Rahmen der vorliegenden Erfindung sind üblicherweise nur die offenen Poren mit Aerogel gefüllt.

Im Rahmen der vorliegenden Erfindung ist es insbesondere gelungen, dass Volumen an offenen Poren, d. h. die Poren, welche von außen zugänglich sind und in welche Aerogel eingebracht bzw. eingelagert werden kann, reproduzierbar einzustellen, insbesondere einen hohen Anteil offener Porosität zu erzeugen, so dass konstante und reproduzierbare Werte für die Wärmeleitfähigkeit der Kompositpartikel erhalten werden können.

Was die Größe der Kompositpartikel anbelangt, so kann diese naturgemäß in weiten Bereich variieren. Besonders gute Ergebnisse werden im Rahmen der vorliegenden Erfindung jedoch erhalten, wenn die Kompositpartikel absolute Partikelgrößen im Bereich von 0,1 bis 10 mm, insbesondere 0,5 bis 8 mm, vorzugsweise 0,1 bis 5 mm, bevorzugt 0,1 bis 3 mm, besonders bevorzugt 0,2 bis 2 mm, aufweisen.

Kompositpartikel mit den vorgenannten Partikelgrößen verfügen einerseits sowohl in Dämmputzen bzw. -massen als auch in loser Schüttung über besonders gute Wärmedämmeigenschaften. Gleichfalls weisen Kompositpartikel, welche auf porösen mineralischen Trägermaterialien basieren, eine besonders gute mechanische Belastbarkeit im vorgenannten Partikelgrößenbereich auf.

Vorzugsweise weisen die Kompositpartikel im Rahmen der vorliegenden Erfindung in loser Schüttung eine Wärmeleitfähigkeit bei 25 °C im Bereich von 0,022 bis 0,042 W/(mK), vorzugsweise 0,023 bis 0,040 W/(mK), bevorzugt 0,024 bis 0,035 W/(mK), besonders bevorzugt 0,025 bis 0,030 W/(mK), auf. Die erfindungsgemäßen porösen Kompositpartikel weisen somit im Vergleich zu rein mineralischen Dämmmaterialien mit bekannt guten Wärmedämmeigenschaften, wie beispielsweise expandiertem Perlit oder expandiertem Vermiculit, deutlich verbesserte Wärmedämmeigenschaften, d. h. eine deutlich geringere Wärmeleitfähigkeit, auf.

Was nun die Schüttdichte der erfindungsgemäßen Kompositpartikel anbelangt, so kann diese im Rahmen der vorliegenden Erfindung in weiten Bereichen variieren. Erfindungsgemäß weise die Kompositpartikel eine Schüttdichte im Bereich von 60 bis 100 kg/m³, vorzugsweise 70 bis 80 kg/m³, auf. Die porösen Kompositpartikel nach der Erfindung können somit einerseits in loser Schüttung als Dämmmaterialien verwendet werden, andererseits ist es jedoch auch möglich, die porösen Kompositpartikel nach der Erfindung in Dämmstoffsysteme, wie beispielsweise Wärmedämmverbundsysteme oder Dämmputze, einzuarbeiten, ohne dass das Gewicht der Dämmstoffsysteme stark ansteigt.

Im Rahmen der vorliegenden Erfindung ist es vorgesehen, dass das Trägermaterial eine Behandlung zur Vergrößerung des Volumens der offenen Poren unterzogen wird. Im Rahmen der vorliegenden Erfindung wird somit die offene Porosität, d. h. das Volumen der Hohlräume innerhalb des Trägermaterials, welche mit der Umgebung verbunden sind, erhöht, um ein größeres Porenvolumen zur Einlagerung bzw. Bildung des Aerogels zugänglich zu machen. Denn, wie die Anmelderin herausgefunden hat, weist insbesondere expandierter Perlit oftmals einen sehr hohen Anteil an geschlossenen Poren auf, so dass es nicht möglich ist, ein Aerogel in den Poren des porösen Trägermaterials, insbesondere des Perlits einzulagern bzw. dort zu bilden. Reagenzlösungen, welche die Edukte zur Bildung der Aerogele enthalten, gelangen nicht in die geschlossenen Poren im Inneren des porösen Trägermaterials. Durch eine Behandlung zur Vergrößerung des offenen Porenvolumens bzw. der spezifischen Oberfläche ist es möglich, deutlich mehr Aerogel in das Porensystem des porösen Trägermaterials einzulagern bzw. dort zu bilden und so Dämmstoffe mit deutlich verbesserten Wärmedämmeigenschaften bereitzustellen, wobei gleichzeitig die mechanische Belastbarkeit der Kompositpartikel gegenüber dem Trägermaterial nicht verringert ist.

Gemäß einer bevorzugten Ausführungsform der vorliegenden Erfindung ist es vorgesehen, dass die Kompositpartikel an ihrer äußeren Oberfläche modifiziert, insbesondere hydrophobiert, sind. Durch eine Oberflächenmodifizierung, insbesondere eine Hydrophobierung, kann bei Verwendung rein mineralischer Trägermaterialien die Hydrophilie und somit die Aufnahme von Wasser durch das Trägermaterial begrenzt oder sogar vollständig vermieden werden. Insbesondere wird es in diesem Zusammenhang bevorzugt, wenn die Oberflächenmodifizierung, insbesondere Hydrophobierung, im Rahmen einer Oberflächenmodifizierung bzw. Hydrophobierung des Aerogels durchgeführt wird.

Unter einer Hydrophobierung ist im Rahmen der vorliegenden Erfindung eine Änderung der Grenzflächeneigenschaften, insbesondere des porösen Trägermaterials und des Gelmaterials, speziell des vorzugsweise für die Aerogelherstellung verwendeten Hydrogels, zu verstehen, welche die Wechselwirkung der behandelten Oberfläche mit polaren Stoffen schwächt. Insbesondere ist im Rahmen der vorliegenden Erfindung unter einer Hydrophobierung eine Oberflächenmodifizierung des porösen Trägermaterials und des Gels, insbesondere des Hydrogels, zu verstehen. Im Zuge der Hydrophobierung wird die Oberfläche des porösen Trägermaterials bzw. des Gels, insbesondere des Hydrogels, derart verändert, dass die Wechselwirkung zwischen der Oberfläche und polaren Stoffen, wie beispielsweise Alkoholen oder Wasser, minimiert wird.

Was nun die Oberflächenmodifizierung anbelangt, so können sämtliche aus dem Stand der Technik bekannte und geeignete Maßnahmen zum Einsatz kommen. Im Rahmen der vorliegenden Erfindung werden jedoch besonders gute Ergebnisse erhalten, wenn die Oberflächenmodifizierung mittels Aerogelen, Phosphonaten, Sulfonaten, substituierten Aminen, Silanen, Polysiloxanen, Silikonaten, Carbonsäurederivaten, Ethoxylaten, Polyethern, insbesondere Silanen, Silikonaten und Polysiloxanen, vorzugsweise Silanen und Silikonaten, und/oder deren Mischungen erfolgt. Insbesondere durch eine Oberflächenmodifizierung mittels Silanen bzw. Silikonaten oder Polysiloxanen kann eine besonders effektive Hydrophobierung des porösen Trägermaterials erreicht werden.

Im Rahmen der vorliegenden Erfindung wird es bevorzugt, wenn durch die Oberflächenmodifizierung insbesondere die Oberfläche, vorzugsweise die äußere Oberfläche, der porösen Trägermaterialien durch Polysiloxane gebildet wird. Die Polysiloxane können dabei durch direkte Behandlung der Oberfläche mit Polysiloxanen oder bevorzugt durch Behandlung mit Silanen und/oder Silikonaten, welche durch Kondensationsreaktionen zu Polysiloxanen reagieren, aufgebracht bzw. gebildet werden.

Eine Oberflächenmodifizierung der porösen Trägermaterialien hat darüber hinaus den Vorteil, dass die Staubentwicklung bei Verwendung der erfindungsgemäßen Kompositpartikel deutlich reduziert, vorzugsweise vollständig unterdrückt, wird. Dies gilt insbesondere bei Verwendung mineralisch basierter Trägermaterialien, welche üblicherweise zu starker Staubentwicklung neigen.

Im Rahmen der vorliegenden Erfindung ist es im Allgemeinen vorgesehen, dass das poröse Trägermaterial in Form von Partikeln vorliegt. Wenn bereits das poröse Trägermaterial in Partikelform vorliegt, kann eine möglichst einfache und gleichmäßige Befüllung der Poren des porösen Trägermaterials mit dem Aerogel erfolgen.

Wenn das Trägermaterial in Partikelform vorliegt, so hat es sich bewährt, wenn die Partikel des porösen Trägermaterials absolute Partikelgrößen im Bereich von 10 bis 5.000 µm, insbesondere 20 bis 4.000 µm, vorzugsweise 30 bis 3.000 µm, bevorzugt 40 bis 2.000 µm, besonders bevorzugt 50 bis 1.500 µm, aufweisen. Die Partikelgröße des porösen Trägermaterials ist somit vorzugsweise etwas geringer als die Partikelgröße der Kompositmaterials, d. h. das Aerogel befindet sich sowohl in den Poren des porösen Trägermaterials als auch auf dessen Oberfläche. Vorzugsweise wird im Rahmen der vorliegenden Erfindung ein feinteiliges Trägermaterial verwendet, da so eine möglichst vollständige Durchdringung der Poren des porösen Trägermaterials mit den verwendeten Aerogelen bzw. deren Prekursoren möglich wird. Hierdurch werden die Dämmeigenschaften, insbesondere die Wärmeleitfähigkeiten, der Kompositpartikel entscheidend verbessert.

Im Rahmen der vorliegenden Erfindung werden besonders gute Ergebnisse erhalten, wenn das poröse Trägermaterial Poren mit Porengrößen im Bereich von 0,05 µm bis 800 µm, insbesondere 0,1 bis 700 µm, vorzugsweise 0,5 µm bis 500 µm, bevorzugt 1 µm bis 300 µm, besonders bevorzugt 2 bis 200 µm, aufweist. Poren mit Größen in den vorgenannten Bereichen spielen insbesondere bei der Wärmeleitfähigkeit der Materialien eine große Rolle, weshalb es wichtig ist, dass gerade diese Poren mit Aerogel gefüllt sind. Darüber hinaus lassen sich insbesondere Poren der vorgenannten Porengrößen besonders leicht und effizient mit Aerogel befüllen. Poren mit geringen Porengrößen spielen jedoch für die Wärmeleitfähigkeit der erfindungsgemäßen Materialien eine nur geringfügige Rolle. Größere Poren sollten hingegen möglichst nicht vorhanden sein, da sie die Stabilität der erfindungsgemäßen Kompositmaterialien verringern.

Üblicherweise wird bei Poren zwischen Mikroporen, Mesoporen und Makroporen unterschieden. Der Begriff der Mikroporen bezeichnet solche Poren mit Porendurchmessern bis zu 20 Å einschließlich, wohingegen der Begriff der Mesoporen solche Poren mit Porendurchmessern von 20 Å bis 50 Å einschließlich bezeichnet und der Begriff der Makroporen solche Poren mit Porendurchmessern > 50 Å bezeichnet.

Im Rahmen der vorliegenden Erfindung kommt es somit vornehmlich auf die Makroporen des porösen Trägermaterials an. Das erfindungsgemäß eingesetzte poröse Trägermaterial kann und wird neben den Makroporen auch Mikro- und Mesoporen aufweisen, welche jedoch für die Wärmeleitfähigkeit und somit die Wärmedämmeigenschaften der Kompositpartikel nur eine untergeordnete Rolle spielen.

Im Rahmen der vorliegenden Erfindung ist es vorgesehn, dass das poröse Trägermaterial ausgewählt ist aus expandiertem Perlit, expandiertem Vermiculit, und deren Mischungen. Die mineralischen bzw. silikatbasierten Trägermaterialien besitzen eine hohe Kompatibilität zu den oftmals gleichfalls silikatbasierten Aerogelen und können mit diesen besonders beständige und dauerhafte Bindungen eingehen. Darüber hinaus verfügen insbesondere die expandierten bzw. geblähten mineralischen bzw. silikatbasierten Trägermaterialien über eine geringe Dichte, so dass sie problemlos in eine Vielzahl von Dämmmaterialien eingearbeitet werden können.

Vorzugsweise weisen die Kompositpartikel im Rahmen der vorliegenden Erfindung die Brennbarkeit A1 oder A2 gemäß DIN 4102 auf. Die porösen Kompositpartikel der vorliegenden Erfindung sind somit vorzugsweise nichtbrennbar, was einen weiteren Vorteil gegenüber gebräuchlich organischen Dämmstoffen, seien sie natürlichen oder synthetischen Ursprungs, bedeutet. Insbesondere kann bei Verwendung mineralischer Trägermaterialien üblicherweise vollkommen auf eine Behandlung mit Brandschutzmitteln verzichtet werden.

Was das Aerogel anbelangt, welches im Rahmen der vorliegenden Erfindung verwendet wird, um in die Poren des porösen Trägermaterials eingelagert zu werden, so handelt es sich um Silica-Aerogele, insbesondere da diese besonders gute und dauerhafte Bindungen mit den porösen Trägermaterialien, insbesondere Gesteinen mit Silkatanteil, eingehen können.

Im Rahmen der vorliegenden Erfindung weist das Aerogel üblicherweise eine Schüttdichte von 0,025 bis 0,30 g/cm³, insbesondere 0,03 bis 0,25 g/cm³, vorzugsweise 0,04 bis 0,22 g/cm³, bevorzugt 0,05 bis 0,15 g/cm³, auf.

Die Schüttdichte des Aerogels bezieht sich auf ein Aerogel, welches nicht direkt auf dem porösen Trägermaterial gebildet wurde, sondern unter ansonsten vergleichbaren Bedingungen, jedoch ohne Trägermaterial.

Was den Porendurchmesser des verwendeten Aerogels anbelangt, so kann dieser naturgemäß in weiten Bereichen variieren. Es hat sich jedoch bewährt, wenn das Aerogel einen mittleren Porendurchmesser von 10 bis 300 nm, insbesondere 40 bis 250 nm, vorzugsweise 60 bis 220 nm, bevorzugt 100 bis 200 nm, besitzt. In diesem Zusammenhang kann es gleichfalls vorgesehen sein, dass das Aerogel einen mittleren Porendurchmesser von weniger als 300 nm, insbesondere weniger als 250 nm, vorzugsweise weniger als 220 nm, bevorzugt weniger als 200 nm, besitzt. Aerogele mit mittleren Porendurchmessern in den vorgenannten Bereichen besitzen besonders gute Wärmedämmeigenschaften und sind gleichzeitig ausreichend mechanisch stabil.

Im Rahmen der vorliegenden Erfindung ist es vorgesehen, dass das Aerogel hydrophobiert ist. Es wird somit im Rahmen der vorliegenden Erfindung bevorzugt, wenn sowohl das Aerogel als auch das poröse Trägermaterial bzw. das poröse Kompositmaterial hydrophobiert sind, um eine Wasseraufnahme möglichst zu vermeiden.

Gemäß einer bevorzugten Ausführungsform der vorliegenden Erfindung weist das Aerogel einen Kontaktwinkel mit Wasser von 100 bis 170°, insbesondere 130 bis 165°, vorzugsweise 140 bis 165°, auf.

Besonders gute Ergebnisse werden im Rahmen der vorliegenden Erfindung erhalten, wenn das Aerogel auf dem porösen Trägermaterial und/oder in den Poren des porösen Trägermaterials, vorzugsweise in den Poren des porösen Trägermaterials, gebildet wird. Durch eine Bildung des Aerogels auf bzw. in dem porösen Trägermaterial wird eine besonders gute Durchdringung der Poren des Trägermaterials mit dem Aerogel erreicht, wodurch einerseits die Wärmedämmeigenschaften der resultierenden Kompositpartikel optimiert werden und andererseits das in den Poren eingelagerte Aerogel optimal geschützt und besonders gut an die Oberfläche des porösen Trägermaterials gebunden ist.

In diesem Zusammenhang hat es sich bewährt, wenn das Aerogel mittels eines Sol-Gel-Verfahrens erhalten wird. D. h. die erfindungsgemäßen Kompositpartikel sind erhältlich, indem ein Sol-Gel-Verfahren zur Herstellung von Silica-Aerogelen in Gegenwart des porösen Trägermaterials durchgeführt wird.

Ganz besonders gute Ergebnisse werden dabei erhalten, wenn während der Herstellung des Aerogels eine *in situ*-Hydrophobierung erfolgt. Eine *in situ*-Hydrophobierung bei der Herstellung des Aerogels führt einerseits dazu, dass ein hydrophobiertes Aerogel erhalten wird, andererseits wird auch die Oberfläche des porösen Trägermaterials in nur einem Arbeitsgang gleichfalls hydrophobiert. Dies ist insbesondere bei Verwendung mineralisch basierter poröser Trägermaterialien, welche eine hohe Hydrophilie aufweisen, vorteilhaft.

Es zeigen die Figurendarstellungen gemäß
- Fig. 1: einen erfindungsgemäßen Kompositpartikel auf Basis von expandiertem Perlit als Trägermaterial,
- Fig.2: eine REM-Aufnahme des Aeorogels in einer Pore des porösen Trägermaterials und
- Fig. 3: eine REM-Aufnahme des Aerogels in einer Pore des porösen Trägermaterials mit einer optischen Bestimmung der Porengröße des Aerogels.

Weiterer Gegenstand der vorliegenden Erfindung - gemäß einem **zweiten** Aspekt der vorliegenden Erfindung - ist die Verwendung von Kompositpartikeln der zuvor beschriebenen Art zur Herstellung von Baumaterialien, insbesondere von Dämmmaterialien, wie Dämmputzen, Dämmplatten oder Wärmedämmverbundsystemen.

Die erfindungsgemäßen Kompositpartikel eignen sich in hervorragender Weise zum Einsatz in Dämmsystemen jeglicher Art und können dort insbesondere als Ersatz für Kunststoffe oder rein mineralisch basierte Dämmstoffe eingesetzt werden.

Für weitergehende Einzelheiten zu diesem Erfindungsaspekt kann auf die vorangehenden Ausführungen zu den erfindungsgemäßen Kompositpartikeln verwiesen werden, welche in Bezug auf die erfindungsgemäße Verwendung entsprechend gelten.

Wiederum weiterer Gegenstand der vorliegenden Erfindung - gemäß einem **dritten** Aspekt der vorliegenden Erfindung - ist ein Verfahren zur Herstellung von porösen Kompositpartikeln, insbesondere für die Wärmedämmung, wobei
(a) in einem ersten Verfahrensschritt das poröse Trägermaterial einer Behandlung zur Vergrößerung des offenen Porenvolumens durch mechanische und/oder chemische Behandlung unterzogen wird, wobei das poröse Trägermaterial ausgewählt ist aus der Gruppe von expandiertem Perlit, expandiertem Vermiculit und deren Mischungen, und
(b) in einem auf den ersten Verfahrensschritt (a) folgenden zweiten Verfahrensschritt in den Poren des porösen Trägermaterials, vorzugsweise auf dem porösen Trägermaterial und in den Poren des porösen Trägermaterials, ein ein Silica-Aerogel gebildet wird, wobei während der Bildung des Gels eine Hydrophobierung, insbesondere eine *in situ*-Hydrophobierung, des Gels durchgeführt wird.

Wie zuvor bereits ausgeführt, erlaubt die Bildung bzw. Herstellung des Aerogels auf bzw. in dem porösen Trägermaterial eine besonders innige Verbindung zwischen Trägermaterial und Aerogel, welche mit besonders guten Wärmedämmeigenschaften der resultierenden Kompositpartikel einerseits und einem besonders guten Schutz des Aerogels andererseits einhergeht. Darüber hinaus wird durch die Bildung des Aerogels auf bzw. in dem porösen Trägermaterial auch eine möglichst weitgehende Durchdringung des porösen Trägermaterials mit dem Aerogel erreicht.

Wie nunmehr gezeigt werden konnte, werden bei der Herstellung von porösen Kompositpartikeln, deren Poren ein Aerogel enthalten, deutlich bessere Ergebnisse erhalten, wenn das poröse Trägermaterial einer Behandlung zur Vergrößerung des offenen Porenvolumens, d. h. des Volumens an Poren, welche mit der Umgebung in Kontakt stehen, unterzogen wird. Auf diese Weise wird es möglich, poröse Kompositmaterialien, deren Poren zur verbesserten Wärmedämmung ein Aerogel enthalten, auch im technischen und großtechnischen Maßstab reproduzierbar herzustellen.

Erfindungsgemäß wird das offene Porenvolumen des porösen Trägermaterials im Rahmen der vorliegenden Erfindung durch mechanische und/oder chemische, vorzugsweise mechanische, Behandlung des porösen Trägermaterials vergrößert.

Wenn das poröse Trägermaterial einer mechanischen Behandlung zur Vergrößerung des offenen Porenvolumens unterzogen wird, so hat es sich bewährt, wenn das poröse Trägermaterial in Verfahrensschritt (a) einem Mahlvorgang, insbesondere in einer Kugelmühle, unterworfen wird. Das Mahlen des porösen Trägermaterials, insbesondere in einer Kugelmühle, stellt eine sehr einfache und kostengünstige Variante zur Erhöhung des offenen Porenvolumens dar. Es hat sich gezeigt, dass durch den Mahlvorgang, nicht allein die Partikel des porösen Trägermaterials zerkleinert und folglich die spezifische Oberfläche erhöht wird, sondern dass auch durch die mechanische Einwirkung auch ein größerer Anteil an offenen Poren für die nachfolgende Bildung des Aerogels zur Verfügung steht.

Wenn das poröse Trägermaterial einer chemischen Behandlung zur Vergrößerung des offenen Porenvolumens unterzogen wird, so wird das poröse Trägermaterial in Verfahrensschritt (a) üblicherweise mit einer Lauge, insbesondere einer wässrigen Lösung eines Alkalimetall- und/oder Erdalkalimetallhydroxids, vorzugsweise eines Alkalimetallhydroxids, behandelt. In diesem Rahmen wird es besonders bevorzugt, wenn das Alkalimetallhydroxid ausgewählt ist aus Natriumhydroxid und/oder Kaliumhydroxid. Im Rahmen der vorliegenden Erfindung werden somit vorzugsweise Natronlauge bzw. Kalilauge für die chemische Behandlung des porösen Trägermaterials verwendet.

Üblicherweise weist die Lösung des Alkalimetallhydroxids und/oder Erdalkalimetallhydroxids das Alkalimetallhydroxid bzw. das Erdalkalimetallhydroxid in Mengen von 5 bis 60 Gew.-%, insbesondere 10 bis 40 Gew.-%, vorzugsweise 10 bis 30 Gew.-%, bezogen auf die Lösung, auf.

Darüber hinaus hat es sich im Rahmen der vorliegenden Erfindung bewährt, wenn das poröse Trägermaterial mit der Lauge bei erhöhter Temperatur, insbesondere bei Temperaturen im Bereich von 30 bis 80°C, insbesondere 35 bis 70 °C, vorzugsweise 45 bis 60°C, behandelt wird. Es hat sich gezeigt, dass bei höheren Temperaturen die Lauge deutlich reaktiver ist und das offene Porensystem des porösen Trägermaterials deutlich schneller und in größerem Umfang erweitert wird.

Falls im Rahmen der vorliegenden Erfindung die Behandlung zur Vergrößerung des offenen Porenvolumens des porösen Trägermaterials auf chemischem Wege durchgeführt wird, so hat es sich bewährt, wenn im Anschluss an den eigentlichen Verfahrensschritt (a) das chemische Behandlungsmittel, insbesondere die Lauge, rückstandsfrei entfernt wird. Dies geschieht vorzugsweise durch wiederholtes Waschen mit Wasser. In diesem Zusammenhang hat es sich bewährt, wenn 1 bis 10 Waschvorgänge, insbesondere 2 bis 7 Waschvorgänge, vorzugsweise 3 bis 5 Waschvorgänge, vorgenommen werden. Eine gründliche Entfernung von Rückständen des bei der chemischen Behandlung eingesetzten Reagenzes, insbesondere von Kali- bzw. Natronlauge, ist oftmals vonnöten, da bei der Bildung von Aerogel die Einhaltung eines bestimmten pH-Wertbereiches kritisch ist. Nicht aus dem System entfernte Laugenrückstände verhindern die Einstellung eines stabilen pH-Wertes und können somit die Bildung des Aerogels erschweren bzw. verhindern.

Besonders gute Ergebnisse werden im Rahmen der vorliegenden Erfindung erhalten, wenn zur Bildung des Aerogels das poröse Trägermaterial mit einem Sol, insbesondere einem Hydrogel, in Kontakt gebracht, insbesondere versetzt, wird.

Im Rahmen der vorliegenden Erfindung hat es sich bewährt, wenn das Sol zu einem Zeitpunkt mit dem porösen Trägermaterial in Kontakt gebracht wird, bei welchen das Sol nur noch zum Gel altern muss, d. h. nur noch die Polymerisationsreaktion vollzogen werden muss.

In diesem Zusammenhang hat es sich als vorteilhaft erwiesen, wenn das poröse Trägermaterial mit dem Hydrosol getränkt wird. Das Sol dringt folglich vorzugsweise in sämtliche (offenen) Poren, insbesondere in die offenen Makroporen, des porösen Trägermaterials ein und füllt diese möglichst vollständig aus.

Gleichermaßen hat es sich als vorteilhaft erwiesen, wenn nach Inkontaktbringen bzw. Durchdringen des Trägermaterials mit dem Sol das Sol zu einem Gel umgesetzt wird. Dieser Prozess wird auch als "altern" bezeichnet und beschreibt den Vorgang der Polymerisations- bzw. Kondensationsreaktionen der einzelnen Moleküle des Sols zu Makromolekülen, dem sogenannten Gel.

Das erhaltene Gel, insbesondere Hydrogel, muss anschließend noch zum Aerogel getrocknet werden. Dies kann beispielsweise in einem Autoklaven unter überkritischen Bedingungen erfolgen. Auch ist die Überführung von Hydrogelen in Alkogele durch Lösemittelaustausch, insbesondere von Wasser gegen Alkohol, möglich, was eine Entfernung des Lösemittels unter schonenderen Bedingungen, jedoch gleichfalls im überkritischen Bereich, erlaubt. Auch das Ersetzen des Lösemittels bzw. der Lösemittelgemische durch Kohlendioxid und eine nachfolgende überkritische Trocknung ist möglich. Diese Varianten sind alle technisch möglich, jedoch apparativ aufwendig. Im Rahmen der vorliegenden Erfindung ist auch eine einfache Entfernung des Löse- bzw. Dispersionsmittel bei erhöhter Temperatur möglich, wobei gleichfalls sehr gute Ergebnisse erhalten weden.

Im Rahmen der vorliegenden Erfindung wird vorzugweise Wasser oder ein Alkohol, bevorzugt Wasser, als einziges Löse- bzw. Dispersionsmittel verwendet, wie nachfolgend noch ausgeführt.

Im Rahmen der vorliegenden Erfindung ist es vorgesehen, dass das Hydrogel hydrophobiert wird. In diesem Zusammenhang hat es sich bewährt, wenn das Hydrogel durch Behandlung, insbesondere chemische Reaktion, mit mindestens einem Hydrophobierungsmittel hydrophobiert wird. Eine Hydrophobierung des Hydrogels ermöglicht zumindest einen Austausch von polaren Lösemitteln, insbesondere Wasser, gegen weniger polare Lösemittel, welche dann unter erhöhter Temperatur und/oder vermindertem Druck entfernt werden können, ohne dass eine Trocknung im überkritischen Bereich notwendig wäre. Aber auch eine überkritische Trocknung des hydrophobierten Aerogels mit Kohlendioxid ist möglich und stellt ein besonders rasches und schonendes Trocknungsverfahren dar.

Darüber hinaus hat eine Hydrophobierung des Aerogels den weiteren Vorteil, dass durch die Poren des porösen Trägermaterials keine Feuchtigkeit, insbesondere kein flüssiges Wasser, in die Kompositpartikel einbringen kann. In diesem Zusammenhang wird es besonders bevorzugt, wenn die äußere Oberfläche des porösen Trägermaterials, welche nicht mit Aerogelen besetzt ist, gleichfalls hydrophobiert wird.

Erfindungsgemäß wird während der Bildung des Gels eine *in situ*-Hydrophobierung des Gels durchgeführt. Eine *in situ*-Hydrophobierung des Gels ermöglicht es, die Oberfläche bzw. die Porenstruktur des Aerogels derart auszubilden, dass die Wechselwirkung mit polaren Stoffen, insbesondere Wasser, derart geschwächt wird, dass eine Entfernung dieser polaren Stoffe durch Erhitzen bzw. Anwendung von Vakuum möglich wird, ohne dass die Aerogel-Struktur zerstört wird. Dies ermöglicht es, bei Auswahl geeigneter Hydrophobierungsmittel, die gesamte Aerogelsynthese in wässrigem Medium durchzuführen. Darüber hinaus wird durch eine *in situ*-Hydrophobierung des Aerogels auch eine Hyrophobierung der Oberfläche des porösen Trägermaterials erreicht.

Durch eine Hydrophobierung kann - wie zuvor ausgeführt - die Wechselwirkung zwischen Oberflächen des Gels und polaren Stoffen, wie beispielsweise Alkoholen oder Wasser, derart geschwächt werden, dass bei Trocknung ein problemloses Entfernen des Löse- bzw. Dispersionsmittels möglich wird, ohne dass die Aerogel-Struktur zerstört wird. Dies ist ungewöhnlich, da insbesondere bei der Herstellung von Silica-Aerogelen in der Regel ein langwieriger Lösemittelaustausch von Alkohol oder Wasser gegen unpolarere Lösemittel vorgenommen werden muss, um letztendlich eine vollständige Entfernung der Löse- und Dispersionsmittel vornehmen zu können. Wird hingegen versucht, das bei der Aerogelherstellung als Zwischenstufe erhaltene Hydrogel oder Aerogel zu trocknen, so wird die Porenstruktur des Gels durch die hohen Kapillarkräfte zerstört. Oftmals muss sogar das gewonnene Hydrogel durch Lösemittelaustausch mit Alkoholen erst in einen Alkogel überführt werden, ehe weitere Lösemittelwechsel durchgeführt werden können, welche schließlich zu einer Durchdringung der porösen Struktur des Gels mit Lösemitteln führen, die problemlos aus dem Gel entfernt werden können, so dass ein Aerogel erhalten wird. Durch eine *in situ*-Hydrophobierung bzw. eine Hydrophobierung während der Bildung des Gels wird im Rahmen der vorliegenden Erfindung eine effiziente Hydrophobierung auch der inneren Grenz- bzw. Oberflächen, insbesondere der Poren, des Aerogels erreicht, so dass eine weitgehend zerstörungsfreie Entfernung von Wasser aus dem Porensystem des Aerogels möglich wird.

In diesem Zusammenhang hat es sich bewährt, wenn das Gel in Gegenwart des Hydrophobierungsmittels gebildet wird.

Besonders gute Ergebnisse werden dabei erhalten, wenn das Hydrophobierungsmittel ausgewählt ist aus Phosphonaten, Sulfonaten, substituierten Aminen, Silanen, Polysiloxanen, Silikonaten, Carbonsäurederivaten, Ethoxylaten, Polyethern, insbesondere Silanen, Polysiloxanen und Silikonaten, sowie deren Mischungen. Insbesondere bei Verwendung von Silanen, Silikonaten und Polysiloxanen, vorzugsweise Silanen und Silikonaten, als Hydrophobierungsmittel ist eine besonders gleichmäßige Einarbeitung in das sich bildende Gelmaterial, insbesondere in Silica-Hydrogele, möglich, wodurch eine wirkungsvolle Oberflächenmodifizierung sämtlicher, d. h. auch innerer, Oberflächen des Gels erreicht werden kann. Dieser Effekt ist insbesondere bei Silanen und Silikonaten besonders ausgeprägt. Darüber hinaus eignen sich Silane, Silikonate und Polysiloxane auch in hervorragender Weise zur Oberflächenmodifizierung, insbesondere Hydrophobierung, von mineralischen bzw. silikatbasierten porösen Trägermaterialien, welche im Rahmen der vorliegenden Erfindung bevorzugt eingesetzt werden.

Wenn im Rahmen der vorliegenden ein Polysiloxan als Hydrophobierungsmittel verwendet wird, kann dessen chemische Natur in weiten Bereichen variieren. In diesem Zusammenhang wird es bevorzugt, wenn ein Polysiloxan mit reaktiven funktionellen Gruppen, insbesondere ausgewählt aus Hydroxyfunktionen, Aminen und/oder Carbonsäuren, eingesetzt wird.

Im Rahmen der vorliegenden Erfindung hat es sich weiterhin bewährt, wenn ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird.

Wenn im Rahmen der vorliegenden Erfindung ein Silan als Hydrophobierungsmittel eingesetzt wird, so kann dessen chemische Natur gleichfalls in weiten Bereichen variieren. Besonders gute Ergebnisse werden jedoch erhalten, wenn ein Silan der allgemeinen Formel I

R¹ₙSiR²₄₋ₙ (I)

mit
n = 1 bis 3, insbesondere 1 oder 2, vorzugsweise 1;
R¹ = C₁- bis C₃₀-Alkyl und/oder C₆- bis C₃₀-Aryl,
   insbesondere C₂- bis C₂₀-Alkyl und/oder C₆- bis C₂₀-Aryl,
   vorzugsweise C₃- bis C₂₀-Alkyl und/oder C₆- bis C₂₀-Aryl,
   bevorzugt C₄- bis C₁₅-Alkyl und/oder C₆- bis C₁₅-Aryl,
   besonders bevorzugt C₅- bis C₁₂-Alkyl und/oder C₆- bis C₁₂-Aryl,
   ganz besonders bevorzugt C₅- bis C₁₂-Alkyl; und
R² = Halogenid, insbesondere Chlorid, Bromid und/oder Iodid,
   OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird. Besonders bevorzugt wird es dabei im Rahmen der vorliegenden Erfindung wenn R² OX, insbesondere Ethoxy, entspricht.

Für den Fall, dass im Rahmen der vorliegenden Erfindung ein Silikonat als Hydrophobierungsmittel eingesetzt wird, so kann eine Vielzahl von Silikonaten verwendet werden. Besonders gute Ergebnisse werden jedoch erhalten, wenn ein Silikonat der allgemeinen Formel II

HO-[Si(R)(OM)-O-]ₙH (II)

mit
n = 1 bis 6, insbesondere 1 bis 3, vorzugsweise 1;
R = C₁- bis C₁₀-Alkyl und/oder C₆- bis C₁₅-Aryl,
   insbesondere C₁- bis C₈-Alkyl und/oder C₆- bis C₁₂-Aryl,
   vorzugsweise C₁- bis C₆-Alkyl und/oder C₆- bis C₁₀-Aryl,
   bevorzugt C₁- bis C₄-Alkyl,
   besonders bevorzugt C₁- bis C₃-Alkyl; und
M = einwertiges Metall,
   insbesondere Alkalimetall, vorzugsweise Natrium oder Kalium;
verwendet wird. In diesem Zusammenhang hat es sich bewährt, wenn das Hydrophobierungsmittel ausgewählt ist aus Natriummethylsilikonat, Kaliummethylsilikonat, Natriumpropylsilikonat und Kaliumpropylsilikonat und deren Mischungen. Gemäß einer bevorzugten Ausführungsform der vorliegenden Erfindung ist das Hydrophobierungsmittel Kaliummethylsilikonat.

Im Rahmen der vorliegenden Erfindung wird es darüber hinaus bevorzugt, wenn ein vorsichtiges Mischen zwischen dem porösen Trägermaterial und dem Sol unter geringer bis mittlerer Scherbeanspruchung stattfindet.

Im Allgemeinen wird im Rahmen der vorliegenden Erfindung als Löse- oder Dispersionsmittel ein polares Löse- oder Dispersionsmittel, insbesondere ein polares protisches Löse- oder Dispersionsmittel, verwendet.

Im Rahmen der vorliegenden Erfindung hat es sich bewährt, wenn das Löse- oder Dispersionsmittel ausgewählt ist aus der Gruppe von Alkoholen, insbesondere C₁-bis Cs-Alkoholen, Aminen und Wasser, insbesondere Methanol, Ethanol, Propanol und Wasser, vorzugsweise Ethanol und Wasser und deren Mischungen. Besonders bevorzugt wird es im Rahmen der vorliegenden Erfindung, wenn das Löse- oder Dispersionsmittel Wasser und/oder ein Alkohol, insbesondere ausgewählt aus der Gruppe von Methanol, Ethanol und Isopropanol, vorzugsweise Wasser, ist. Ein Vorteil der Verwendung von Wasser ist, dass es weder giftig noch unter den Gesichtspunkten des Umweltschutzes bedenklich ist. Darüber hinaus ist Wasser nicht brennbar und problemlos zu entsorgen.

Unter einem Löse- oder Dispersionsmittel sind dabei im Rahmen der vorliegenden Erfindung flüssige Medien zu verstehen, welche imstande sind, chemische Verbindungen, insbesondere Salze, zu lösen bzw. zu dispergieren. Lösemittel bewirken dabei eine Trennung einzelner Bestandteile chemischer Stoffe, d. h. die Stoffe werden auf molekularer Ebene in Einzelmoleküle bzw. in einzelne Bestandteile, wie beispielsweise Ionen, getrennt und dann in Lösung überführt, wobei die einzelnen Bestandteile dauerhaft separiert bleiben und makroskopisch und mikroskopisch als homogenes Einphasensystem wirken. Unter einer Dispersion ist im Rahmen der vorliegenden Erfindung ein Zweiphasengemisch zu verstehen, bei welchem eine erste Phase mit dem zu dispergierenden Stoff, die sogenannte diskontinuierliche Phase, in einer zweiten Phase, dem Dispersionsmittel bzw. der kontinuierlichen Phase, fein verteilt, insbesondere homogen verteilt, vorliegt. Der Übergang von Lösungen zu Dispersionen ist jedoch fließend, so können beispielsweise kolloidale Lösungen weder eindeutig den Lösungen noch den Dispersionen zugerechnet werden. Auch bei "Lösungen" von hochpolymeren Makromolekülen ist nicht eindeutig bestimmbar, ob eine Lösung oder eine Dispersion vorliegt.

Gemäß einer bevorzugten Ausführungsform der vorliegenden Erfindung wird zur Durchführung des Verfahrens, insbesondere in Verfahrensschritt (b), nur ein Löse- oder Dispersionsmittel oder eine Mischung aus zwei Löse- oder Dispersionsmitteln, vorzugsweise nur ein Löse- oder Dispersionsmittel, verwendet.

Die Verwendung nur eines Lösemittels oder eines Löse- bzw. Dispersionsmittelgemisches im Verlauf des erfindungsgemäßen Verfahrens vereinfacht die Verfahrensführung ganz erheblich, da bei der Herstellung von Aerogelen, insbesondere von Silica-Aerogelen, oftmals mehrere Lösemittelwechsel vorgenommen werden müssen. Ein mehrmaliger Lösemittelwechsel führt einerseits zu einem verfahrenstechnisch erhöhten Aufwand, andererseits wird auch die Entsorgung der Lösemittelreste bzw. Dispersionsmittelreste deutlich erschwert, da diese oftmals getrennt gesammelt und entsorgt werden müssen.

Im Rahmen der vorliegenden Erfindung wird somit vorzugsweise nur ein einziges Lösemittel, insbesondere Wasser, verwendet. Dies bedeutet, dass beispielsweise Lösungen oder Dispersionen, welche in Verfahrensschritt (b) verwendet werden, stets ein und das gleiche Lösemittel, vorzugsweise Wasser, aufweisen. Da Verfahrensschritt (a) vorzugsweise ohne organische Löse- bzw. Dispersionsmittel bzw. vorzugsweise mit wässrigen Lösungen durchgeführt wird, wird im Rahmen der vorliegenden Erfindung bevorzugt Wasser als alleiniges Löse- bzw. Dispergiermittel eingesetzt.

Gemäß einer bevorzugten Ausführungsform der vorliegenden Erfindung wird Verfahrensschritt (b) in mehreren Verfahrensstufen durchgeführt, wobei
(i) in einer ersten Verfahrensstufe (i) ein poröses Trägermaterial mit einem Sol, insbesondere einem Hydrosol, in Kontakt gebracht wird, insbesondere getränkt wird; und
(ii) in einer nachfolgenden zweiten Verfahrensstufe (ii) das Sol zu einem Gel, insbesondere einem Hydrogel, umgesetzt wird.

Auf diese besondere und bevorzugte Ausführungsform des erfindungsgemäßen Verfahrens können die zuvor geschilderten Verfahrensparameter und Merkmale uneingeschränkt gleichermaßen angewendet werden, d. h. die zuvor beschriebenen Merkmale des erfindungsgemäßen Verfahrens können in uneingeschränkter Art und Weise auch für die geschilderte besondere Ausführungsform gelten.

Üblicherweise wird in einer vorbereitenden, der Verfahrensstufe (i) vorgelagerten, Verfahrensstufe mindestens ein Sol, insbesondere ein Hydrosol, hergestellt.

Im Allgemeinen wird im Rahmen der vorliegenden Erfindung das Sol aus einer Lösung oder Dispersion mindestens eines Prekursors hergestellt. In diesem Zusammenhang hat es sich bewährt, wenn die Lösung oder Dispersion den Prekursor in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält. In den zuvor genannten Konzentrationsbereichen wird eine besonders gleichmäßige Polymerisation bzw. Kondensation der Solmoleküle bzw. -partikel erreicht, so dass ein besonders homogenes Gel, insbesondere Hydrogel, erhalten wird.

Das Sol, insbesondere das Hydrosol, kann im Rahmen der vorliegenden Erfindung aus einer Vielzahl von möglichen Prekusorverbindungen hergestellt werden. Besonders gute Ergebnisse werden jedoch erhalten, wenn ein Hydrosol auf Basis von Monokieselsäure und/oder kolloidaler Kieselsäure aus einer Alkalisilikat-Lösung, insbesondere Natriumsilikat-Lösung, als Prekursor hergestellt wird.

Wenn im Rahmen der vorliegenden Erfindung das Hydrosol aus einer Alkalisilikat-Lösung hergestellt wird, so hat es sich bewährt, wenn das Hydrosol durch Umsetzung der Alkalisilikat-Lösung mit Mineralsäuren, insbesondere Salzsäure, Salpetersäure und/oder Schwefelsäure, oder durch Ionenaustausch, vorzugsweise durch Ionenaustausch, hergestellt wird.

Besonders gute Ergebnisse werden in diesem Zusammenhang erhalten, wenn der Ionenaustausch mit einem stark sauren Kationenaustauscherharz, insbesondere einem sulfonierten Polystyrolharz, vorzugsweise einem sulfonierten divinylbenzolvernetzten Polystyrolharz, durchgeführt wird. Die Verwendung von Ionenaustauschern, insbesondere auf Basis von sulfonierten divinylbenzolvernetzten Polystyrolharzen, führt zu besonders reinen Hydrosolen, welche nahezu frei sind von Salzen, insbesondere störenden Ionen, welche die Polymerisation des Aerogels behindern bzw. zu Fehlstellen im Gel führen.

Im Rahmen der vorliegenden Erfindung hat es sich bewährt, wenn das Sol nach seiner Herstellung einen pH-Wert im Bereich von 1 bis 6, insbesondere 2 bis 4, vorzugsweise 2 bis 3, aufweist. Gleichermaßen werden im Rahmen der vorliegenden Erfindung gute Ergebnisse erhalten, wenn das Sol einen pH-Wert von weniger als 6, insbesondere weniger als 4, insbesondere weniger als 3, aufweist. Mit den vorgenannten pH-Werten wird eine besonders homogene Verteilung von nach Möglichkeit niedermolekularen Solmolekülen bzw. -partikeln erzielt.

Darüber hinaus ist im Rahmen der vorliegenden Erfindung vorteilhaft, wenn das Sol eine Leitfähigkeit bei 20 °C von höchstens 1.500 µS/cm, insbesondere höchstens 1.000 µS/cm, vorzugsweise höchstens 800 µS/cm, aufweist. Gleichfalls werden besonders gute Ergebnisse erhalten, wenn das Sol eine Leitfähigkeit bei 20 °C im Bereich von 100 bis 1.500 µS/cm, insbesondere 200 bis 1.000 µS/cm, vorzugsweise 300 bis 800 µS/cm, aufweist. Geringe Leitfähigkeitswerte zeigen an, dass das Sol weitgehend frei ist von Ionen, insbesondere von Fremdionen, welche die anschließende Polymerisation bzw. Kondensation zum Gel negativ beeinflussen.

Üblicherweise wird Verfahrensstufe (i) bei Raumtemperatur oder in einem Temperaturbereich von 15 bis 30 °C, insbesondere von 20 bis 25 °C, durchgeführt.

Im Rahmen der vorliegenden Erfindung hat es sich bewährt, wenn Verfahrensstufe (i) unter erhöhtem Druck, insbesondere bei einem Absolutdruck von 2 bis 12 bar, insbesondere 3 bis 10 bar, vorzugsweise 4 bis 9 bar, bevorzugt 6 bis 8 bar, durchgeführt wird.

In diesem Zusammenhang hat es sich insbesondere bewährt, wenn Verfahrensstufe (i) nicht dauerhaft unter erhöhtem Druck durchgeführt wird. Besonders gute Ergebnisse werden erhalten, wenn in Verfahrensstufe (i) der Druck in Intervallen, insbesondere in 2 bis 50 Intervallen, vorzugsweise 5 bis 40 Intervallen, bevorzugt 8 bis 30 Intervallen, besonders bevorzugt 10 bis 20 Intervallen, erhöht wird. Hierbei wird es bevorzugt, wenn der Druck ausgehend vom Umgebungsdruck bzw. von Normaldruck erhöht wird.

Gemäß dieser Ausführungsform der vorliegenden Erfindung werden insbesondere dann gute Ergebnisse erhalten, wenn während eines Intervalls die Mischung aus Sol und porösen Partikeln für einen Zeitraum von 1 bis 20 Minuten, insbesondere 5 bis 10 Minuten, erhöhtem Druck ausgesetzt wird, insbesondere unter leichter Bewegung, wie beispielsweise unter Rühren. Vorzugsweise wird Verfahrensstufe (i) anschließend für einen Zeitraum von 1 bis 60 Minuten, insbesondere 5 bis 50 Minuten, vorzugsweise 10 bis 40 Minuten, bevorzugt 20 bis 30 Minuten, bei Normaldruck bzw. Umgebungsdruck durchgeführt, insbesondere wobei die Mischung aus Sol und porösen Partikeln bei Normaldruck bzw. Umgebungsdruck ruhen gelassen wird.

Gemäß einer bevorzugten Ausführungsform der vorliegenden Erfindung wird der pH-Wert des Sols, insbesondere zur Gelbildung, im Bereich von 3,5 bis 7, insbesondere 3,5 bis 6,5, vorzugsweise 4 bis 6, bevorzugt 4 bis 5 eingestellt. Im vorgenannten Bereich findet eine besonders gleichmäßige und kontrollierte Polymerisation bzw. Kondensation des Sols zum Gel, insbesondere von Silica-Hydrosolen zu Hydrogelen, statt. Was nun die Einstellung des pH-Wertes, insbesondere in Verfahrensstufe (i), anbelangt, so kann diese auf vielfältige Art und Weise erfolgen. Besonders gute Ergebnisse werden im Rahmen der vorliegenden Erfindung jedoch erhalten, wenn der pH-Wert durch Zugabe einer Base, insbesondere durch Zugabe von Natronlauge, Kalilauge und/oder wässriger Ammoniak-Lösung, vorzugsweise wässriger Ammoniak-Lösung, eingestellt wird. Die Verwendung von Ammoniak-Lösung hat insbesondere den Vorteil, dass die entstehenden Ammoniumionen die Polymerisation bzw. Kondensation des Sols zum Gel nicht negativ beeinflussen und darüber hinaus nicht in die Gelstruktur eingebaut werden, im Gegensatz zu beispielsweise Natrium- oder Kaliumionen.

Gleichfalls kann es vorgesehen sein, dass der pH-Wert durch Zugabe von Säure, insbesondere einer Mineralsäure, vorzugsweise Salzsäure, eingestellt wird. Eine Einstellung des pH-Werts durch Zugabe von Säuren ist insbesondere kann insbesondere notwendig sein, wenn stark basische Hydrophobierungsmittel, wie beispielsweise Alkalimetallsilikonate, verwendet werden.

Im Rahmen der vorliegenden Erfindung wird es bevorzugt, wenn in Verfahrensstufe (i) das Sol mit mindestens einem Hydrophobierungsmittel in Kontakt gebracht, insbesondere versetzt, wird.

Im Allgemeinen wird das Hydrophobierungsmittel im Rahmen der vorliegenden Erfindung in Form einer Lösung oder Dispersion, insbesondere einer wässrigen Lösung oder Dispersion, eingesetzt. Was in diesem Zusammenhang die Konzentration des Hydrophobierungsmittels in der Lösung oder Dispersion anbelangt, so kann diese in weiten Bereichen variieren. Besonders gute Ergebnisse werden jedoch erhalten, wenn die Lösung oder Dispersion das Hydrophobierungsmittel in Mengen von 1 bis 90 Gew.-%, insbesondere 10 bis 80 Gew.-%, vorzugsweise 30 bis 70 Gew.-%, bevorzugt 40 bis 60 Gew.-%, bezogen auf die Lösung oder Dispersion des Hydrophobierungsmittels, enthält.

Besonders gute Ergebnisse werden im Rahmen der vorliegenden Erfindung erhalten, wenn das gewichtsbezogene Verhältnis von Solpartikeln zu Hydrophobierungsmittel im Bereich von 10 : 1 bis 1 : 20, insbesondere 5: 1 bis 1 : 10, vorzugsweise 3 : 1 bis 1 : 5, bevorzugt 2 : 1 bis 1 : 4, besonders bevorzugt 1 : 1 bis 1 : 3, variiert wird. In den vorgenannten Verhältnissen werden besonders stabile Aerogele erhalten, welche durch Trocknen problemlos von Lösemittelresten bzw. Dispersionsmittelresten, insbesondere Wasser, befreit werden können. Unter Solpartikeln sind dabei die gelösten bzw. dispergierten Teilchen des Sols, insbesondere der Kieselsäure, zu verstehen.

Im Rahmen der vorliegenden Erfindung wird es bevorzugt, wenn - insbesondere in Verfahrensstufe (i) - das Sol mit dem Hydrophobierungsmittel in Kontakt gebracht wird bevor das poröse Trägermaterial mit dem Sol in Kontakt gebracht wird. Es hat sich herausgestellt, dass beste Ergebnisse erzielt werden, wenn die Reaktionsmischung zur Herstellung des Gels, insbesondere des Hydrogels, soweit fertiggestellt ist, dass nur noch durch Temperaturerhöhung und Altern die Bildung des Gels abzuwarten bleibt, ehe das vorbereitete Sol mit dem porösen Trägermaterial in Kontakt gebracht wird.

Die Zugabe des Hydrophobierungsmittels zu dem Sol erfolgt vorzugsweise über mehrere Minuten unter leichter Scherbeanspruchung.

Im Rahmen der vorliegenden Erfindung wird es darüber hinaus bevorzugt, wenn - insbesondere in Verfahrensstufe (i) - die Einstellung des pH-Wertes erfolgt, nachdem das Sol mit dem Hydrophobierungsmittel in Kontakt gebracht wurde. In diesem Zusammenhang werden besonders gute Ergebnisse erhalten, wenn die Einstellung des pH-Wertes 0,1 bis 60 min, vorzugsweise 0,5 bis 30 min, bevorzugt 0,5 bis 15 min, erfolgt, nachdem das Sol mit dem Hydrophobierungsmittel in Kontakt gebracht wurde. Durch eine Einstellung des pH-Wertes wird die Polymerisations- bzw. Kondensationsreaktion im Sol in Gang gesetzt.

Üblicherweise wird im Rahmen der vorliegenden Erfindung - insbesondere in Verfahrensstufe (i) - das poröse Trägermaterial zu dem Sol gegeben, insbesondere unter Rühren. Es ist jedoch auch möglich, das Sol vorsichtig zu dem porösen Trägermaterial zuzugeben. Es wird jedoch bevorzugt, das poröse Trägermaterial langsam zu dem Sol zu geben.

Das gewichtsbezogene Verhältnis von porösem Trägermaterial zu Hydrosol, insbesondere Hydrosolpartikeln, liegt üblicherweise im Bereich von 5 : 1 bis 1 : 20, insbesondere 3 : 1 bis 1 : 15, vorzugsweise 1 : 1 bis 1 : 10, bevorzugt 1 : 1 bis 1 : 5.

Was nun die Dauer anbelangt, in welcher das Sol - insbesondere in Verfahrensstufe (i) - und das poröse Trägermaterial in Kontakt gebracht werden, so kann dieser Zeitraum in weiten Bereichen variieren. Besonders gute Ergebnisse werden jedoch erhalten, wenn das Sol und das poröse Trägermaterial für mindestens 1 Stunde, insbesondere mindestens 2 Stunden, vorzugsweise mindestens 3 Stunden, bevorzugt mindestens 6 Stunden, in Kontakt gebracht werden. Gleichfalls hat es sich bewährt, wenn das Sol und das poröse Trägermaterial für höchstens 24 Stunden, insbesondere höchstens 18 Stunden, vorzugsweise höchstens 15 Stunden, bevorzugt höchstens 12 Stunden, in Kontakt gebracht werden. In diesem Zusammenhang kann es gleichfalls vorgesehen sein, dass das Sol und das poröse Trägermaterial für einen Zeitraum von 1 bis 24 Stunden, insbesondere 2 bis 18 Stunden, vorzugsweise 3 bis 15 Stunden, bevorzugt 6 bis 12 Stunden, in Kontakt gebracht werden. Die Dauer des Inkontaktbringens ist dabei unter anderem abhängig von der Art des verwendeten Hydrophobierungsmittels, der Korngröße des porösen Trägermaterials sowie der Porenstruktur, insbesondere der Porengrößenverteilung, der porösen Trägermaterials.

Wenn ein Inkontaktbringen des Sols und des porösen Trägermaterials in vorbeschriebenen Zeiträumen durchgeführt wird, so wird eine vollständige Durchdringung des porösen Trägermaterials mit dem Sol gewährleistet, was bei der anschließenden Gelbildung zu einer möglichst vollständigen Befüllung der Poren des porösen Trägermaterials mit Aerogel führt.

Was die Temperatur anbelangt, bei welcher - insbesondere in Verfahrensstufe (i) - das Sol und das poröse Trägermaterial in Kontakt gebracht werden, so kann diese in weiten Bereichen variieren. Besonders gute Ergebnisse werden jedoch erhalten, wenn das Sol und das poröse Trägermaterial bei Raumtemperatur in Kontakt gebracht werden. In diesem Zusammenhang hat es sich bewährt wenn das Sol und das poröse Trägermaterial im Temperaturbereich von 15 bis 30 °C, insbesondere 20 bis 25 °C, in Kontakt gebracht werden.

Ein Inkontaktbringen des Sols und des porösen Trägermaterials bei Raumtemperatur hat den Vorteil, dass die Gelbildung nur sehr langsam voranschreitet, so dass das poröse Trägermaterial vollständig von dem Hydrosol durchdrungen werden kann. Eine zu rasche Gelbildung würde verhindern, dass das Sol bzw. Gel weit in die Poren eindringt bzw. auch kleinere Poren ausfüllt.

Wie zuvor bereits dargelegt, hat es sich im Rahmen der vorliegenden Erfindung bewährt, wenn das Sol und das poröse Trägematerial - insbesondere in Verfahrensstufe (i) - unter erhöhtem Druck in Kontakt gebracht wird, insbesondere wobei der erhöhte Druck in Intervallen angewendet wird und vorzugsweise ein mehrmaliger Druckaufbau vorgenommen wird. Hierdurch wird insbesondere gewährleistet, dass das poröse Trägermaterial rasch und vollständig von dem Sol durchdrungen wird.

Im Rahmen der vorliegenden Erfindung ist es im Allgemeinen vorgesehen, dass in Verfahrensstufe (ii) die Mischung auf Temperaturen im Bereich von 30 bis 90 °C, insbesondere 35 bis 85 °C, bevorzugt 40 bis 80 °C, besonders bevorzugt 50 bis 75 °C, besonders bevorzugt 60 bis 70 °C, erwärmt wird. Eine Erwärmung in Verfahrensstufe (ii) ermöglicht eine rasche Gelbildung, insbesondere in den Poren des porösen Trägermaterials.

In diesem Zusammenhang kann es weiterhin vorgesehen sein, dass die Mischung für 1 bis 100 Stunden, insbesondere 5 bis 85 Stunden, vorzugsweise 10 bis 70 Stunden, bevorzugt 20 bis 60 Stunden, besonders bevorzugt 24 bis 48 Stunden, bei der erhöhten Temperatur gehalten wird. Gleichfalls ist es möglich, dass die Mischung für weniger als 100 Stunden, insbesondere weniger als 85 Stunden, vorzugsweise weniger als 70 Stunden, bevorzugt weniger als 60 Stunden, besonders bevorzugt weniger als 48 Stunden, bei der erhöhten Temperatur gehalten wird.

Die vorgenannten Reaktionsdauern reichen üblicherweise aus, um eine vollständige Umsetzung des Sols zum Gel zu erzielen.

Im Rahmen der vorliegenden Erfindung ist es darüber hinaus üblicherweise vorgesehen, dass in einer auf Verfahrensstufe (ii) folgenden Verfahrensstufe (iii) das in Verfahrensstufe (ii) erhaltene Hydrogel zu einem Aerogel verarbeitet wird, insbesondere wobei die in Verfahrensstufe (ii) erhaltenen ein Gel enthaltenden Partikel isoliert und anschließend getrocknet werden.

Was nun die Trocknung des Gels zu einem Aerogel anbelangt, so kann dieses - wie zuvor ausgeführt - auf vielfältige Art und Weise geschehen.

Im Rahmen der vorliegenden Erfindung kann es sein, dass die ein Hydrogel aufweisenden Partikel bei Temperaturen im Bereich von 20 bis 200 °C, insbesondere 30 bis 150 °C, vorzugsweise 40 bis 120 °C, bevorzugt 50 bis 100 °C, getrocknet werden. Gleichfalls werden besonders gute Ergebnisse erhalten, wenn die ein Hydrogel aufweisenden Partikel für eine Dauer von 8 bis 72 Stunden, insbesondere 12 bis 60 Stunden, vorzugsweise 24 bis 48 Stunden, getrocknet werden. Dies ist insbesondere auch bei der Verwendung von Wasser als einzigem Löse- bzw. Dispergiermittel möglich, falls eine geeignete Hydrophobierung des Aerogels vorgenommen wird. Bevorzugt wird die zuvor beschriebene thermische Trocknung bei Normal- bzw. Umgebungsdruck durchgeführt.

Gemäß einer bevorzugten Ausführungsform der vorliegenden Erfindung werden die ein Hydrogel aufweisenden Partikel einer überkritischen Trocknung mit Kohlenstoffdioxid unterzogen. Die überkritische Trocknung ist im Vergleich zur rein thermischen Trocknung sehr viel weniger zeitaufwendig und rascher durchzuführen, wodurch der erhöhte apparative Aufwand in ökonomischer Hinsicht kompensiert werden kann. Bei der Trocknung mit überkritischem Kohlenstoffdioxid wird das Löse- bzw. Dispergiermittel, insbesondere Wasser, sukzessive durch Kohlenstoffdioxid aus den Poren des Aerogels verdrängt bzw. in diesem gelöst und das Kohlenstoffdioxid nach vollständiger Sättigung des Gels mit Kohlenstoffdioxid in die Gasphase überführt.

Mit den zuvor beschriebenen Verfahren ist es möglich, die erfindungsgemäßen Kompositpartikel zu erhalten.

Für weitergehende Einzelheiten zu dem erfindungsgemäßen Verfahren kann auf die vorhergehenden Ausführungen zu den erfindungsgemäßen Kompositpartikeln und der erfindungsgemäßen Verwendung verwiesen werden, welche in Bezug auf das erfindungsgemäße Verfahren entsprechend gelten.

Wiederum weiterer Gegenstand der vorliegenden Erfindung - gemäß einem **vierten** Aspekt der vorliegenden Erfindung - ist ein Dämmstoff, aufweisend Kompositpartikel wie zuvor beschrieben.

Für weitergehende Einzelheiten zu diesem Erfindungsaspekt kann auf die vorangehenden Ausführungen zu den übrigen Erfindungsaspekten verwiesen werden, welche in Bezug auf den erfindungsgemäßen Dämmstoff entsprechend gelten.

### Ausführungsbeispiele:

### A. Herstellung von porösen Kompositpartikeln

Nachfolgend wird die Synthese der erfindungsgemäßen Kompositpartikel mit dem Verfahren nach der Erfindung beschrieben:
**1. Vergrößerung des offenen Porenvolumens des Trägermaterials** 500 g expandiertes Perlit mit Korngrößen im Bereich von 0,5 bis 2 mm werden 20 min in einer Kugelmühle gemahlen. Es werden Partikel mit Partikelgrößen von 200 bis 1.000 µm erhalten.
**2. Synthese von Aerogel in den Poren des Trägermaterials**
   a) Herstellung eines Hydrosols
      Eine kommerziell erhältliche Natriumsilikat-Lösung wird mit deionisiertem Wasser auf ein Gehalt von ca. 5 Gew.-% Natriumsilikat, bezogen auf das Gesamtgewicht der Lösung, verdünnt und bei Raumtemperatur durch ein stark saures Kation-Austauscherharz auf Basis von sulfoniertem divinylbenzolvernetztem Polystyrol geleitet. Es wird eines Lösung mit einer Leitfähigkeit von ca. 800 µS/cm erhalten. Es hat somit ein nahezu vollständiger Austausch von Natrium gegen Protonen stattgefunden, so dass ein Hydrosol aus Kieselsäuremolekülen vorliegt.
   b) Zugabe des Hydrophobierungsmittels
      Das Hydrosol wird bei Raumtemperatur mit einer Dispersion von 45 Gew.-% Hexyltriethoxysilan in Wasser versetzt. Hierbei wird ein gewichtsbezogenes Verhältnis von gelösten Solpartikeln, d. h. Ortho-Kieselsäure, zu Silan von 1 : 3 eingestellt. Der pH-Wert der resultierenden Dispersion wird anschließend mit wässriger Ammoniaklösung auf einen Wert von ca. 4,5 eingestellt.
   c) Zugabe des porösen Trägermaterials
      Zu 600 g der unter b) erhaltenen Dispersion werden in einem Autoklaven 75 g des unter 1.) erhaltenen expandierten Perlits gegeben. Unter Rühren wird der Druck im Autoklaven für 10 Minuten auf 7 bar eingestellt. Anschließend wird die Mischung 20 Minuten bei Raumtemperautr und Normaldruck belassen. Diese Abfolge wird über insgesamt 6 Stunden fotgesetzt, damit das Hydrosol die Porenstruktur des expandierten Pelits vollständig durchdringen kann.
   d) Herstellung hydrogelhaltiger Kompositpartikel
      Die unter c) erhaltene Mischung wird für 24 Stunden auf eine Temperatur von 70 °C erwärmt, wobei sich in den Poren des expandierten Perlits eine pastöse Masse bildet, welche auch auf den Oberflächen der Perlitpartikel eine dünne Schicht bildet.
   e) Herstellung aerogelhaltiger Kompositpartikel
      Die in d) erhaltenen hydrogelhaltigen Kompositpartikel werden mittels eines Siebes von überschüssiger Flüssigkeit getrennt. Die Partikel werden in einen Ofen überführt und dort für 42 Stunden bei einer Temperatur von 85 °C getrocknet. Hierdurch wird die Bildung von Aerogelstrukturen in den Poren des expandierten Perlits erzielt, während an der Oberfläche des expandierten Perlits keine Aerogelstrukturen gebildet werden, sondern vielmehr allein eine Hydrophobierungsschicht bzw. eine Schicht aus hydrophobierter Kieselsäure nachzuweisen ist.

Die erhaltenen Kompositpartikel weisen eine Schüttdichte von ca. 75 g/l auf. Die Wärmeleitfähigkeit in loser Schüttung beträgt 0,030 W/(mK).

Die erfindungsgemäßen Kompositpartikel werden mittels Rasterelektronenmikroskopaufnahmen (REM-Aufnahmen) untersucht, insbesondere auch um Porengrö-ßen innerhalb des Aerogels zu bestimmen. Übliche Methoden zur Bestimmung der Porengröße, wie beispielsweise Durchströmungsporosimetrie, von porösen Feststoffen liefern keine genauen Angaben, da es sich um ein Kompositmaterial aus zwei verschiedenen Komponenten handelt.

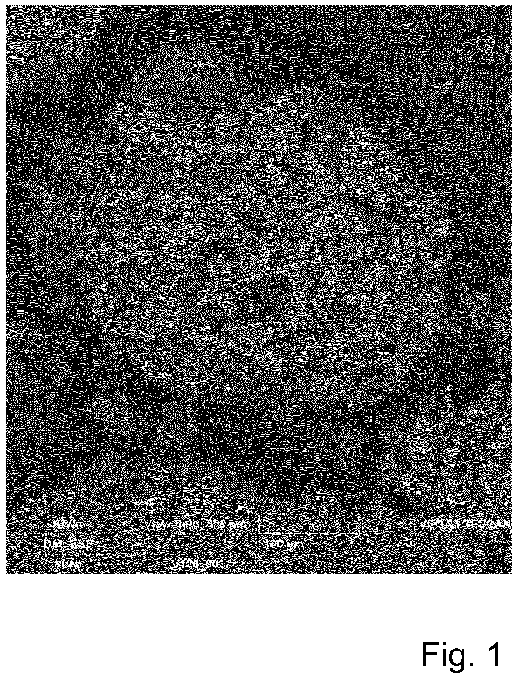

Die Ergebnisse der REM-Aufnahmen sind in den Figuren 1 bis 3 dargestellt.

Es zeigt Fig. 1 einen erfindungsgemäßen Kompositpartikel auf Basis expandierten Perlits, dessen offene Poren mit Aerogel gefüllt sind. Darüber hinaus zeigt sich, dass auch die Oberfläche des Perlitpartikels zumindest teilweise mit Aerogel überzogen ist, wodurch eine Hydrophobisierung der Partikeloberfläche erfolgt.

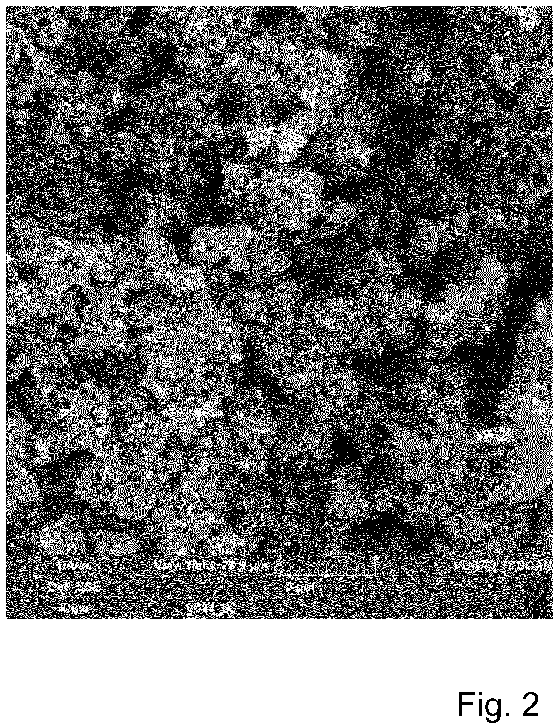

Es zeigt Fig. 2 in einer stärkeren Vergrößerung das Aerogel innerhalb einer Pore des expandierten Perlits. Es zeigt sich, dass in den Poren des expandierten Perlits ein Aerogel mit einer ausgeprägten Porenstruktur vorliegt.

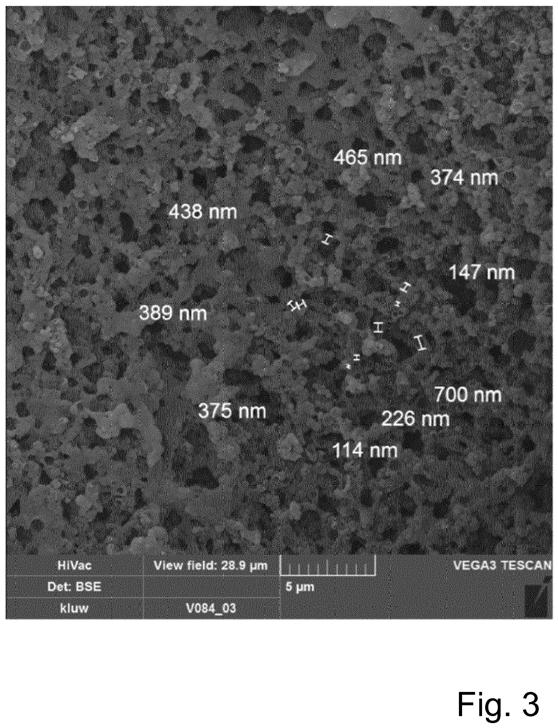

Fig. 3 zeigt schließlich gleichfalls das in einer Pore des expandierten Perlits vorliegende Aerogel in starker Vergrößerung, wobei durch optische Methoden beispielhaft typische Porengrößen bestimmt werden. Es zeigt sich, dass innerhalb des Aerogels Pore mit Porengrößen im Bereich von 114 bis 700 µm vorliegen. Das in den offenen Poren des expandierten Perlits gebildete Aerogel ist somit tatsächlich ein feinporiges Aerogel, welches zu einer deutlichen Verbesserung der Wärmedämmeigenschaften des expandierten Perlits beiträgt.

### B. Verwendung der porösen Kompositpartikel nach der Erfindung

Die erfindungsgemäßen porösen Kompositpartikel eignen sich in hervorragender Weise zur Verwendung in Dämmstoffen und Wärmedämmsystemen aller Art. Exemplarisch wird nachfolgend die Verwendung der erfindungsgemäßen porösen Kompositpartikel in einem Wärmedämmputz beschrieben.

Es wird ein Putzmörtel aus

| | |
|---|---|
| hydraulischem Kalk | 35 Gewichtsteile, |
| Weißzement | 7 Gewichtsteile, |
| Kompositpartikeln (expandierter Perlit) | 57 Gewichtsteile sowie |
| Additiven | 1 Gewichtsteil |

verwendet. Der Putzmörtel besitzt eine Schüttdichte von 250 kg/m³.

50 l des Putzmörtels werden mit 15 l Wasser angemacht, wobei 40 l Frischmörtel erhalten werden.

Nach Trocknung weist der Wärmedämmputz eine Wärmeleitfähigkeit von 0,031 W/(mK) auf.

## Patentansprüche

1. Poröse Kompositpartikel, insbesondere für die Wärmedämmung, umfassend mindestens ein poröses Trägermaterial, **dadurch gekennzeichnet, dass** die offenen Poren des porösen Trägermaterials mindestens ein Silica-Aerogel aufweisen,
wobei das poröse Trägermaterial ausgewählt ist aus der Gruppe von expandiertem Perlit, expandiertem Vermiculit und deren Mischungen und das poröse Trägermaterial einer Behandlung zur Vergrößerung des offenen Porenvolumens durch mechanische und/oder chemische Behandlung unterzogen wurde,
wobei das Aerogel hydrophobiert ist,
wobei die Kompositpartikel eine Schüttdichte im Bereich 60 bis 100 kg/m³ aufweisen und wobei die Kompositpartikel in loser Schüttung eine Wärmeleitfähigkeit bei 25 °C im Bereich von 0,020 bis 0,045 W/(mK) aufweisen.

2. Kompositpartikel nach Anspruch 1, **dadurch gekennzeichnet, dass** die Kompositpartikel absolute Partikelgrößen im Bereich von 0,01 bis 10 mm, insbesondere 0,05 bis 8 mm, vorzugsweise 0,1 bis 5 mm, bevorzugt 0,1 bis 3 mm, besonders bevorzugt 0,2 bis 2 mm, aufweisen.

3. Kompositpartikel nach Anspruch 1 oder 2, **dadurch gekennzeichnet,**
**dass** die Kompositpartikel in loser Schüttung eine Wärmeleitfähigkeit bei 25 °C im Bereich von 0,022 bis 0,042 W/(mK), vorzugsweise 0,023 bis 0,040 W/(mK), bevorzugt 0,024 bis 0,035 W/(mK), besonders bevorzugt 0,025 bis 0,030 W/(mK), aufweisen und/oder
**dass** die Kompositpartikel eine Schüttdichte im Bereich von 70 bis 80 kg/m³aufweisen.

4. Kompositpartikel nach einem der vorangehenden Ansprüche, **dadurch gekennzeichnet dass** die Kompositpartikel an ihrer äußeren Oberfläche hydrophobiert sind.

5. Kompositpartikel nach Anspruch 4, **dadurch gekennzeichnet, dass** die Oberflächenmodifizierung mittels Aerogelen, Phosphonaten, Sulfonaten, substituierten Aminen, Silanen, Polysiloxanen, Silikonaten, Carbonsäurederivaten, Ethoxylaten, Polyethern, insbesondere Silanen, Silikonaten und Polysiloxanen, vorzugsweise Silanen und Silikonaten, und/oder deren Mischungen erfolgt.

6. Verwendung von Kompositpartikeln nach einem der Ansprüche 1 bis 5 zur Herstellung von Baumaterialien, insbesondere von Dämmmaterialien, wie Dämmputzen, Dämmplatten oder Wärmedämmverbundsystemen.

7. Verfahren zur Herstellung von porösen Kompositpartikeln, insbesondere für die Wärmedämmung,
**dadurch gekennzeichnet,**
**dass**
(a) in einem ersten Verfahrensschritt das poröse Trägermaterial einer Behandlung zur Vergrößerung des offenen Porenvolumens durch mechanische und/oder chemische Behandlung unterzogen wird, wobei das poröse Trägermaterial ausgewählt ist aus der Gruppe von expandiertem Perlit, expandiertem Vermiculit und deren Mischungen, und
(b) in einem auf den ersten Verfahrensschritt (a) folgenden zweiten Verfahrensschritt in den Poren des porösen Trägermaterials ein Silica-Aerogel gebildet wird, wobei das Aerogel mittels eines Sol-Gel-Verfahrens gebildet wird, wobei während der Bildung des Gels eine Hydrophobierung, insbesondere eine *in* situ-Hydrophobierung, des Gels durchgeführt wird.

8. Verfahren nach Anspruch 7, **dadurch gekennzeichnet, dass** das offene Porenvolumen durch mechanische Behandlung des porösen Trägermaterials vergrößert wird.

9. Verfahren nach einem der vorangehenden Ansprüche, **dadurch gekennzeichnet, dass** das Hydrophobierungsmittel ausgewählt ist aus Phosphonaten, Sulfonaten, substituierten Aminen, Silanen, Polysiloxanen, Silikonaten, Carbonsäurederivaten, Ethoxylaten, Polyethern, insbesondere Silanen, Silikonaten und Polysiloxanen, vorzugsweise Silanen und Silikonaten, sowie deren Mischungen.

10. Dämmstoff, aufweisend Kompositpartikel nach einem der Ansprüche 1 bis 5.

## Claims

1. Porous composite particles, in particular for thermal insulation, comprising at least one porous carrier material, **characterized in that** the open pores of the porous carrier material comprise at least one silica aerogel,
wherein the porous carrier material is selected from the group of expanded perlite, expanded vermiculite and mixtures thereof and the porous carrier material has been subjected to a treatment to increase the open pore volume by mechanical and/or chemical treatment,
wherein the aerogel is hydrophobized,
wherein the composite particles have a bulk density in the range of 60 to 100 kg/m³ and wherein the composite particles in bulk have a thermal conductivity at 25 °C in the range of 0.020 to 0.045 W/(mK).

2. Composite particles according to claim 1, **characterized in that** the composite particles have absolute particle sizes in the range from 0.01 to 10 mm, in particular 0.05 to 8 mm, preferably 0.1 to 5 mm, preferably 0.1 to 3 mm, particularly preferably 0.2 to 2 mm.

3. Composite particle according to claim 1 or 2, **characterized**
**In that** the composite particles in bulk have a thermal conductivity at 25 °C in the range from 0.022 to 0.042 W/(mK), preferably 0.023 to 0.040 W/(mK), preferably 0.024 to 0.035 W/(mK), particularly preferably 0.025 to 0.030 W/(mK), and/or
**In that** the composite particles have a bulk density in the range of 70 to 80 kg/m³.

4. Composite particles according to one of the preceding claims, **characterized in that** the composite particles are hydrophobized on their outer surface.

5. The composite particle according to claim 4, **characterized in that** the surface modification is carried out by means of aerogels, phosphonates, sulfonates, substituted amines, silanes, polysiloxanes, siliconates, carboxylic acid derivatives, ethoxylates, polyethers, in particular silanes, siliconates and polysiloxanes, preferably silanes and siliconates, and/or mixtures thereof.

6. Use of composite particles according to any one of claims 1 to 5 for the manufacture of building materials, in particular insulating materials, such as insulating plasters, insulating panels or composite thermal insulation systems.

7. Process for the production of porous composite particles, in particular for thermal insulation,
**characterized in that**
(a) in a first process step, the porous carrier material is subjected to a treatment to increase the open pore volume by mechanical and/or chemical treatment, wherein the porous carrier material is selected from the group of expanded perlite, expanded vermiculite and mixtures thereof, and
(b) in a second process step following the first process step (a), a silica aerogel is formed in the pores of the porous carrier material, the aerogel being formed by means of a sol-gel process, wherein a hydrophobization, in particular an *in situ hydrophobization,* of the gel is carried out during the formation of the gel.

8. Process according to claim 7, **characterized in that** the open pore volume is increased by mechanical treatment of the porous carrier material.

9. Process according to one of the preceding claims, **characterized in that** the hydrophobing agent is selected from phosphonates, sulfonates, substituted amines, silanes, polysiloxanes, siliconates, carboxylic acid derivatives, ethoxylates, polyethers, in particular silanes, siliconates and polysiloxanes, preferably silanes and siliconates, and mixtures thereof.

10. Insulating material comprising composite particles according to any one of claims 1 to 5.

## Revendications

1. Particules composites poreuses, en particulier pour l'isolation thermique, comprenant au moins un matériau support poreux, **caractérisées en ce que** les pores ouverts du matériau support poreux présentent au moins un aérogel de silice,
dans lequel le matériau de support poreux est choisi dans le groupe de la perlite expansée, de la vermiculite expansée et de leurs mélanges, et le matériau de support poreux a été soumis à un traitement pour augmenter le volume de pores ouverts par traitement mécanique et/ou chimique,
l'aérogel étant hydrophobe,
les particules composites présentant une densité apparente dans la plage de 60 à 100 kg/m³ et les particules composites en vrac présentant une conductivité thermique à 25°C dans la plage de 0,020 à 0,045 W/(mK).

2. Particules composites selon la revendication 1, **caractérisées en ce que** les particules composites présentent des tailles de particules absolues dans la plage de 0,01 à 10 mm, en particulier de 0,05 à 8 mm, de préférence de 0,1 à 5 mm, de préférence de 0,1 à 3 mm, de manière particulièrement préférée de 0,2 à 2 mm.

3. Particules composites selon la revendication 1 ou 2, **caractérisées en ce que**
**en ce que** les particules composites en vrac présentent une conductivité thermique à 25 °C dans la plage de 0,022 à 0,042 W/(mK), de préférence de 0,023 à 0,040 W/(mK), de préférence de 0,024 à 0,035 W/(mK), de manière particulièrement préférée de 0,025 à 0,030 W/(mK), et/ou
**en ce que** les particules composites présentent une densité apparente dans la plage de 70 à 80 kg/m³ .

4. Particules composites selon l'une quelconque des revendications précédentes, **caractérisées en ce que** les particules composites sont rendues hydrophobes sur leur surface extérieure.

5. Particules composites selon la revendication 4, **caractérisées en ce que** la modification de surface est réalisée au moyen d'aérogels, de phosphonates, de sulfonates, d'amines substituées, de silanes, de polysiloxanes, de siliconates, de dérivés d'acides carboxyliques, d'éthoxylates, de polyéthers, en particulier de silanes, de siliconates et de polysiloxanes, de préférence de silanes et de siliconates, et/ou de leurs mélanges.

6. Utilisation de particules composites selon l'une des revendications 1 à 5 pour la fabrication de matériaux de construction, en particulier de matériaux isolants, tels que des enduits isolants, des panneaux isolants ou des systèmes composites d'isolation thermique.

7. Procédé de fabrication de particules composites poreuses, notamment pour l'isolation thermique,
**caractérisé en ce que**
(a) dans une première étape du procédé, le matériau de support poreux est soumis à un traitement pour augmenter le volume de pores ouverts par traitement mécanique et/ou chimique, le matériau de support poreux étant choisi dans le groupe de la perlite expansée, de la vermiculite expansée et de leurs mélanges, et
(b) dans une deuxième étape de procédé suivant la première étape de procédé (a), un aérogel de silice est formé dans les pores du matériau support poreux, l'aérogel étant formé au moyen d'un procédé sol-gel, une hydrophobisation, en particulier une *hydrophobisation in situ,* du gel étant effectuée pendant la formation du gel.

8. Procédé selon la revendication 7, **caractérisé en ce que** le volume de pores ouverts est augmenté par traitement mécanique du matériau de support poreux.

9. Procédé selon l'une des revendications précédentes, **caractérisé en ce que** l'agent hydrophobe est choisi parmi les phosphonates, les sulfonates, les amines substituées, les silanes, les polysiloxanes, les siliconates, les dérivés d'acides carboxyliques, les éthoxylates, les polyéthers, notamment les silanes, les siliconates et les polysiloxanes, de préférence les silanes et les siliconates, ainsi que leurs mélanges.

10. Matériau isolant comprenant des particules composites selon l'une quelconque des revendications 1 à 5.
